# EUROPEAN PATENT APPLICATION

(11) **EP 4 842 090 A1**
(43) Date of publication of application: **18.11.2026**
(21) Application number: 24917020.0
(22) Date of filing: 11.12.2024
(51) Int. Cl.: H04W 60/00, H04W 8/22, H04W 28/14, H04W 84/06

(54) **USER EQUIPMENT (UE)**

(30) Priority: 10.01.2024 JP 2024001729
(71) Applicant: Sharp Kabushiki Kaisha, Sakai City, Osaka 590-8522 (JP)
(72) Inventor: SUGAWARA Yasuo, Sakai-ku, Sakai City Osaka 590-8522 (JP); CHIBA Shuichiro, Sakai-ku, Sakai City Osaka 590-8522 (JP)
(74) Representative: Müller Hoffmann & Partner
(86) International application number: PCT/JP2024/043863
(87) International publication number: WO 2025/150335

(57) **Abstract**

A UE capable of communicating with a satellite equipped with a base station function transmits, to the satellite, information indicating that an S&F mode is supported, receives, from the satellite, information indicating that a registration request message has been stored, and information indicating that a feeder link is not available, and a timer value, sets the timer value in a timer and starts the timer, and stops the timer that is in operation in a case of receiving information indicating that the registration request message has been forwarded.

## Description

### Technical Field

The present invention relates to a User Equipment (UE).

This application claims priority to Japanese Patent Application No. 2024-001729, filed in Japan on January 10, 2024, the contents of which are incorporated herein by reference.

### Background Art

In the 3rd Generation Partnership Project (3GPP: trade name), system architecture of a 5G System (5GS), which is a fifth generation (5G) mobile communication system, has been studied, and discussions are underway to support new procedures and new functions (see NPLs 1 and 2).

### Citation List

### Non Patent Literature

NPL 1: 3GPP TS 24.501 V18.5.0 (2023-12); 3rd Generation Partnership Project; Technical Specification Group Core Network and Terminals; Non-Access-Stratum (NAS) protocol for 5G System (5GS); Stage 3 (Release 18)
NPL 2: 3GPP TS 24.301 v18.5.0 (2023-12); 3rd Generation Partnership Project; Technical Specification Group Core Network and Terminals; Non-Access-Stratum (NAS) protocol for Evolved Packet System (EPS); Stage 3 (Release 18)
NPL 3: 3GPP TR 23.700-29 V0.2.0 (2023-11); 3rd Generation Partnership Project; Technical Specification Group Services and System Aspects; Study on Integration of satellite components in the 5G architecture; Phase 3 (Release 19)

### Summary of Invention

### Technical Problem

Release 19 is scheduled to study Store and Forward (also referred to as S&F) satellite operation, but discloses nothing about how to realize the operation (see NPL 3).

An aspect of the present invention has been made in view of the circumstances as described above. An object of the present invention is to clarify how to realize the store and forward satellite operation and to clarify detailed behaviors of a UE and/or a satellite and/or a network.

### Solution to Problem

According to an aspect of the present invention, a UE includes a transmission and/or reception unit and a controller, the UE is capable of communicating with a satellite equipped with a base station function, the transmission and/or reception unit transmits, to the satellite, information indicating that an S&F mode is supported, and receives, from the satellite, information indicating that a registration request message has been stored, information indicating that a feeder link is not available, and a timer value, the controller sets the timer value in a timer and starts the timer, and in a case that the transmission and/or reception unit receives information indicating that the registration request message has been forwarded, the controller stops the timer that is in operation.

### Advantageous Effect of Invention

According to an aspect of the present invention, it is possible to clearly define a method for implementing the store and forward satellite operation, as well as to clarify the detailed behaviors of the UE and/or the satellite and/or the network.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of a UE.
FIG. 4 is a diagram illustrating a configuration of an access network apparatus.
FIG. 5 is a diagram mainly illustrating a configuration of a core network apparatus.

### Description of Embodiment

A preferred embodiment for carrying out an aspect of the present invention will be described below with reference to the drawings. Note that an embodiment of a mobile communication system to which an aspect of the present invention is applied will be described as an example in the present embodiment.

### 1. Overview of System

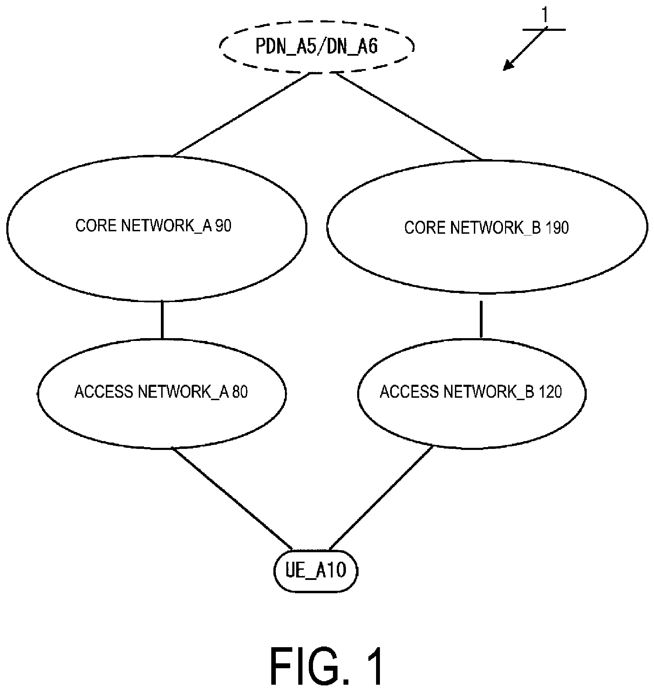

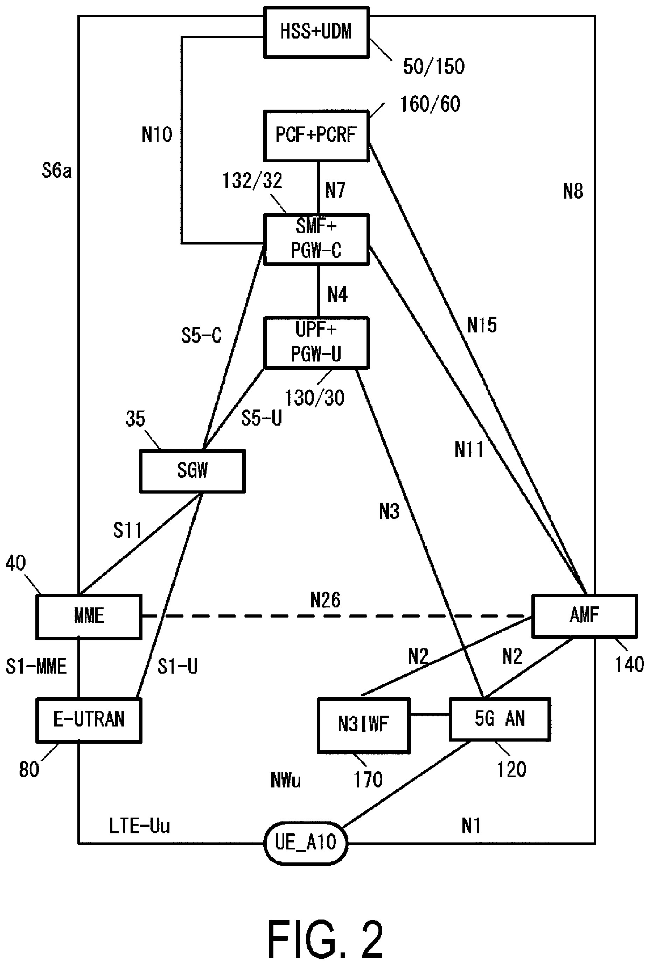

First, FIG. 1 is a diagram illustrating an overview of a mobile communication system 1 used in each embodiment, and FIG. 2 is a diagram illustrating a detailed configuration of the mobile communication system 1.

FIG. 1 illustrates the mobile communication system 1 including a UE_A 10, an access network_A 80, a core network_A 90, a Packet Data Network (PDN)_A 5, an access network_B 120, a core network_B 190, and a Data Network (DN)_A 6.

In the following description, the reference numerals of these apparatuses and functions may be omitted, as in a UE, an access network_A, a core network_A, a PDN, an access network_B, a core network_B, a DN, and the like.

FIG. 2 illustrates apparatuses and functions such as the UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other.

In the following description, the reference numerals of these apparatuses and functions may be omitted as in a UE, an E-UTRAN, an MME, an SGW, a PGW-U, a PGW-C, a PCRF, an HSS, a 5G AN, an AMF, a UPF, an SMF, a PCF, a UDM, an N3IWF, and the like.

Note that an Evolved Packet System (EPS) that is a 4G system includes the access network_A and the core network_A and may further include the UE and/or the PDN. A 5G System (5GS) that is a 5G system includes the UE, the access network_B, and the core network_B and may further include the DN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile phone or a smartphone, and may be a terminal apparatus that can be connected to the EPS and/or the 5GS. The UE may include a Universal Integrated Circuit Card (UICC) and an Embedded UICC (eUICC). Note that the UE may be referred to as a user equipment or a terminal apparatus.

The access network_A corresponds to an Evolved Universal Terrestrial Radio Access Network (E-UTRAN) and/or a wireless LAN access network. In the E-UTRAN, one or more evolved Node Bs (eNBs) 45 are deployed. Note that, in the following description, the reference numeral of the eNB 45 may be omitted as in eNB. In a case that there are multiple eNBs, the eNBs are connected to each other via, for example, an X2 interface. One or more access points are deployed on the wireless LAN access network.

The access network_B corresponds to a 5G access network (5G AN). The 5G AN may be an NG Radio Access Network (NG-RAN) and/or a non-3GPP access network. One or more NR NodeBs (gNBs) 122 are deployed on the NG-RAN. Note that in the following description, the symbol for the gNB 122 may be omitted as a gNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) designed for the EPS that is a 4G system. In a case that there are multiple gNBs, the gNBs are connected to each other via, for example, an Xn interface.

A non-3GPP access network may include an untrusted non-3GPP access network and a trusted non-3GPP access network. Here, the untrusted non-3GPP access network may be a non-3GPP access network that does not manage security on the access network, for example, a public wireless LAN. On the other hand, the trusted non-3GPP access network may be an access network defined by 3GPP and may include a trusted non-3GPP access point (TNAP) and a trusted non-3GPP Gateway function (TNGF).

In the following description, the E-UTRAN and the NG-RAN may be referred to as 3GPP access. The wireless LAN access network and the non-3GPP AN may be referred to as non-3GPP access. Nodes deployed on the access network_B may be collectively referred to as NG-RAN nodes.

In the following description, the access network_A, the access network_B, an apparatus included in the access network_A, and an apparatus included in the access network_B may be referred to as an access network, an access network apparatus, or an intra-access network apparatus.

The core network_A corresponds to an Evolved Packet Core (EPC). In the EPC, for example, a Mobility Management Entity (MME), a Serving Gateway (SGW), a Packet Data Network Gateway (PGW)-U, a PGW-C, a Policy and Charging Rules Function (PCRF), a Home Subscriber Server (HSS), and the like are deployed.

The core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be expressed as the 5GC.

In the following description, the core network_A, the core network_B, an apparatus included in the core network_A, and an apparatus included in the core network_B may be referred to as a core network, a core network apparatus, or an intra-core network apparatus.

The core network (the core network_A and/or the core network_B) may refer to an IP mobile communication network operated by a mobile communication operator (Mobile Network Operator (MNO)) connecting the access network (the access network_A and/or the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

FIG. 1 illustrates a case that the PDN and the DN are the same; however, the PDN and the DN may be different. The PDN may be a Data Network (DN) that provides communication services to the UE. Note that the DN may be configured as a packet data service network or may be configured for each service. In addition, the PDN may include a connected communication terminal. Thus, "to be connected to the PDN" may mean "to be connected to a communication terminal and/or a server apparatus deployed in the PDN". In addition, "to transmit and/or receive user data to and/or from the PDN" may mean "to transmit and/or receive user data to and/or from a communication terminal and/or a server apparatus deployed in the PDN". Note that the PDN may be expressed as a DN, and the DN may be expressed as a PDN.

In the following, at least some of the access network_A, the core network_A, the PDN, the access network_B, the core network_B, and the DN, and/or one or more apparatuses included in these may be referred to as a network (also referred to as an NW) or a network apparatus. In other words, the expression that "the network and/or the network apparatus transmits and/or receives a message and/or performs a procedure" means that "at least some of the access network_A, the core network_A, the PDN, the access network_B, the core network_B, and the DN, and/or one or more apparatuses included in these transmit and/or receive a message and/or perform a procedure".

The UE can be connected to the access network. The UE can be connected to the core network over the access network. In addition, the UE can be connected to the PDN or the DN over the access network and the core network. In other words, the UE can transmit and/or receive (communicate) user data to and/or from the PDN or the DN. In a case that user data is transmitted and/or received, not only Internet Protocol (IP) communication but also non-IP communication may be used.

Here, IP communication refers to data communication using the IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. Non-IP communication refers to data communication not using the IP, where data is transmitted and/or received in a form different from the structure of the IP packets. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

Apparatuses which are not illustrated in FIG. 2 may be included in the access network_A, the core network_A, the access network_B, the core network_B, the PDN_A, and the DN_A. For example, the core network_A and/or the core network_B may include an Authentication Server Function (AUSF) and an Authentication, authorization, and accounting (AAA) server (AAA-S).

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

The AAA server is an apparatus that is connected directly to the AUSF or indirectly to the AUSF via another network apparatus and has authentication, authorization, and billing functions. The AAA server may be a network apparatus within the core network. Note that the AAA server may not be included in the core network_A and/or the core network_B and may be included in the PLMN. In other words, the AAA server may be a core network apparatus or may be an apparatus outside the core network. For example, the AAA server may be a server apparatus within the PLMN managed by a 3rd party.

Note that, although each of the apparatuses and functions is illustrated one by one for simplicity in FIG. 2, multiple similar apparatuses and functions may be included in the mobile communication system 1. Specifically, multiple apparatuses and functions such as multiple pieces of UE_A 10, E-UTRANs 80, MMEs 40, SGWs 35, PGW-Us 30, PGW-Cs 32, PCRFs 60, HSSs 50, 5G ANs 120, AMFs 140, UPFs 130, SMFs 132, PCFs 160, and/or UDMs 150 may be included in the mobile communication system 1.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. At least a part (including all) of the functions of each apparatus may be configured as physical hardware, logical hardware, or software.

Note that each of the storage units (storage unit_A 340, storage unit_B 540, and storage unit_B 740) in the apparatuses and functions appearing below includes, for example, a semiconductor memory, a Solid State Drive (SSD), a Hard Disk Drive (HDD), or the like. Each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. Each storage unit can store identification information, control information, flags, parameters, and the like included in a control message transmitted and/or received in various communication procedures to be described below. Each storage unit may store these pieces of information for each UE. In a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of UE

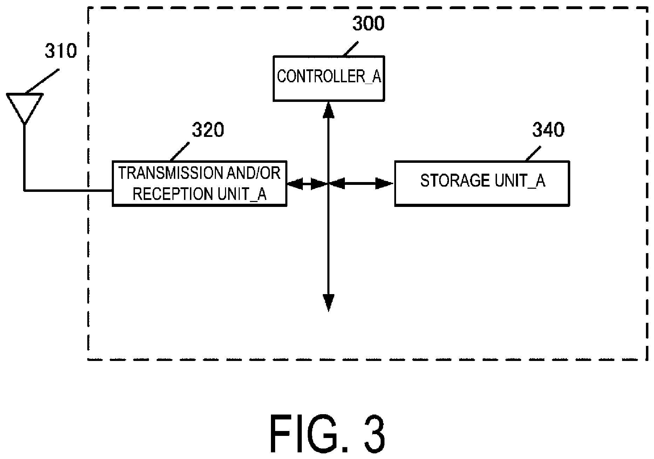

First, an apparatus configuration example of the User Equipment (UE) will be described with reference to FIG. 3. The UE includes a controller_A 300, an antenna 310, a transmission and/or reception unit_A 320, and a storage unit_A 340. The controller_A 300, the transmission and/or reception unit_A 320, and the storage unit_A 340 are connected via a bus. The transmission and/or reception unit_A 320 is connected to the antenna 310.

The controller_A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. The UE can communicate with the base station apparatus (gNB) within the 5G AN with the use of the transmission and/or reception unit_A 320. The UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE. The storage unit_340 may have a function of storing control information transmitted and/or received to and/or from the access network apparatus, the core network apparatus, and the DN.

The UE may be capable of communicating with a satellite equipped with the function of the base station apparatus.

### 2.2. Apparatus Configuration of Base Station Apparatus

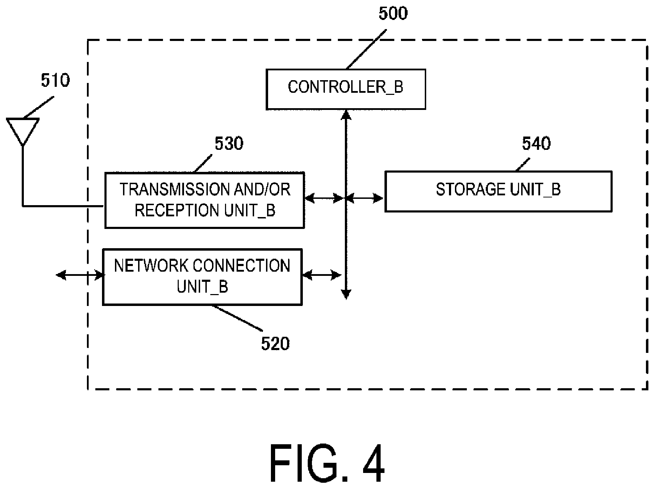

Next, an apparatus configuration example of the base station apparatus will be described with reference to FIG. 4. The base station apparatus may be a gNB, or an eNB, or an en-gNB, or an ng-eNB. Here, as the base station apparatus, a case of a gNB will be described by way of example. That is, in the following description, the gNB may be interchangeably interpreted as an eNB, an en-gNB, or an ng-eNB. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. The gNB can communicate with the UE with the use of the transmission and/or reception unit_B 530.

The storage unit_B 540 is a function unit that stores programs, user data, control information, and the like necessary for each operation of the gNB. The storage unit_540 may have a function of storing control information transmitted and/or received to and/or from the UE and another access network apparatus (base station apparatus), core network apparatus, and DN.

A satellite equipped with at least the function of the base station apparatus may be simply referred to herein as a satellite or a base station apparatus. Here, the base station apparatus may be referred to as a base station, and may refer to an access point accommodated in a gNB, or an eNB, or an en-gNB, or an ng-eNB, or a non-3GPP access (such as an access point as used in a wireless LAN).

### 2.3. Apparatus Configuration of AMF/MME

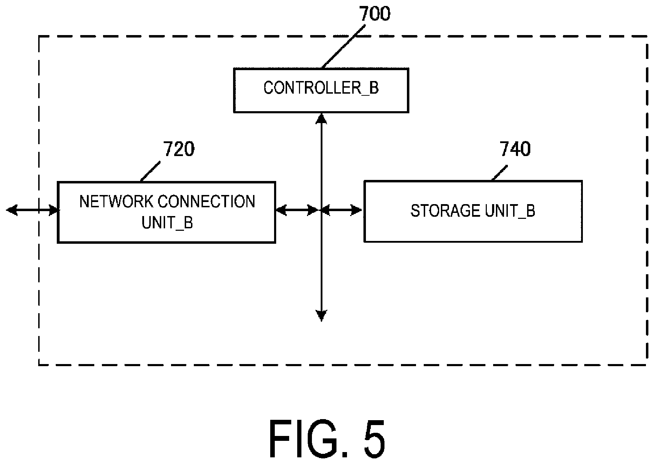

Next, an apparatus configuration example of the AMF and the MME corresponding to a part of a core network apparatuses or a core network function will be described. Here, an apparatus configuration example of the AMF will be described with reference to FIG. 5. Here, the case of the AMF will be described as an example, but the AMF may be interchangeably interpreted as the MME. The AMF includes a controller_B 700, a network connection unit_B 720, and a storage unit_B 740. The controller_B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB), and/or the SMF, and/or the PCF, and/or the UDM, and/or the SCEF, and/or the NSACF in the 5G AN. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. The AMF can transmit and/or receive a NAS message to and/or from the UE over the N1 interface with the use of the network connection unit_A 620. However, the N1 interface is a logical interface, and thus communication between the UE and the AMF is actually performed over the 5G AN. In a case that the AMF supports an N26 interface, the AMF can communicate with the MME over the N26 interface with the use of the network connection unit_A 620.

The storage unit_B 740 is a function unit that stores programs, user data, control information, and the like necessary for each operation of the AMF. The storage unit_740 may have a function of storing control information transmitted and/or received to and/or from the UE, the access network apparatus, and another core network apparatus and DN.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of forwarding a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In registration management, an RM state for each UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In the RM-REGISTERED state, because the UE is registered in the network, the UE can receive a service that requires registration with the network. Note that the RM state may be expressed as a 5GMM state. In this case, the RM-DEREGISTERED state may be expressed as a 5GMM-DEREGISTERED state, and the RM-REGISTERED state may be expressed as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may start transmission and/or reception of user data and a control message, or may respond to paging. Furthermore, note that, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be expressed as an idle mode, and a connected state mode may be expressed as a connected mode.

Note that the CM state may be expressed as a 5GMM mode. In this case, the non-connected state may be expressed as a 5GMM non-connected mode (5GMM-IDLE mode), and the connected state may be expressed as a 5GMM connected mode (5GMM-CONNECTED mode). In addition, the non-connected state in 3GPP access may be expressed as a 5GMM non-connected mode in 3GPP access (5GMM-IDLE mode over 3GPP access), and the connected state in 3GPP access may be expressed as a 5GMM connected mode in 3GPP access (5GMM-CONNECTED mode over 3GPP access). In addition, the non-connected state in non-3GPP access may be expressed as a 5GMM non-connected mode in non-3GPP access (5GMM-IDLE mode over non-3GPP access), and the connected state in non-3GPP access may be expressed as a 5GMM connected mode in non-3GPP access (5GMM-CONNECTED mode over non-3GPP access). Note that the 5GMM non-connected mode may be expressed as an idle mode, and the 5GMM connected mode may be expressed as a connected mode.

One or more AMFs may be deployed within the core network_B. The AMF may be a Network Function (NF) that manages one or more Network Slice Instances (NSIs). The AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.4. Apparatus Configuration of SMF/PGW

Next, an apparatus configuration example of the SMF corresponding to a part of a core network apparatus or a core network function will be described with reference to FIG. 5. Here, a case of the SMF will be described as an example, but the SMF may be interchangeably interpreted as the PGW or the PGW-C. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM, and/or the NSACF.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of providing notification of arrival of downlink data (Downlink Data Notification), a function of providing SM information specific to an AN (for each AN) that is transmitted to the AN through the AMF over the N2 interface, a function of determining a Session and Service Continuity mode (SSC mode) for a session, a roaming function, and the like.

The storage unit_740 may have a function of storing control information transmitted and/or received to and/or from the UE, the access network apparatus, and another core network apparatus and DN.

### 2.5. Apparatus Configuration of UPF/PGW/SGW

Next, an apparatus configuration example of the UPF corresponding to a core network apparatus or a core network function will be described with reference to FIG. 5. Here, a case of the UPF will be described as an example, but the UPF may be interchangeably interpreted as the PGW, the PGW-U, or the SGW. The PGW may have the functions of both the PGW-C and the PGW-U. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be interconnected with the DN (that is, a function of forwarding user data as a gateway between the DN and the core network_B), a function of routing and forwarding packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

The UPF may be a gateway for IP communication and/or non-IP communication. The UPF may have a function of forwarding IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

The storage unit_740 may have a function of storing control information transmitted and/or received to and/or from the UE, the access network apparatus, and another core network apparatus and DN.

### 2.6. Description of Other Apparatuses and/or Functions and Identification Information according to Present Embodiment

Next, other apparatuses and/or functions and identification information will be described.

A network refers to at least some of the access network_B, the core network_B, and the DN. One or more apparatuses included in at least a part of the access network_B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing".

The user plane (also referred to as a UP) refers to user data that is transmitted and/or received between the UE and the network. In addition, the UP may be a communication path for transmitting and/or receiving user data, and may include multiple bearers. The UP may be transmitted and/or received using a PDN connection in 4G, or a PDU session in 5G. In the EPS, the UP may be transmitted and/or received using an LTE-Uu interface, and/or an S1-U interface, and/or an S5 interface, and/or an S8 interface, and/or an SGi interface. In the 5GS, the UP may be transmitted and/or received over the interface between the UE and the NG RAN, and/or the N3 interface, and/or the N9 interface, and/or the N6 interface. The UP may be hereinafter expressed as a U-Plane.

The control plane (also referred to as a CP) refers to a control message that is transmitted and/or received in order to perform communication control of the UE or the like. Furthermore, the CP may be a communication path for transmitting and/or receiving control messages, and may include multiple bearers. The CP may be transmitted and/or received using Non-Access-Stratum (NAS) signalling connection between the UE and the MME. The CP may be transmitted and/or received using Non-Access-Stratum (NAS) signalling connection between the UE and the AMF. In the EPS, the CP may be transmitted and/or received using the LTE-Uu interface and an S1-MME interface. In the 5GS, the CP may be transmitted and/or received using the interface between the UE and the NG RAN and the N2 interface. The CP may be hereinafter expressed as a control plane, or may be hereinafter expressed as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

A Mobility Management (MM) message may be a control message transmitted and/or received between the UE and the AMF or the MME in the MM procedure, and may be a NAS message (also referred to as a NAS MM message).

The MM procedure (also referred to as a "procedure for MM") may include a Registration procedure initiated by the UE, a De-registration procedure initiated by the UE or the AMF (or the network), a Generic UE Configuration Update procedure initiated by the AMF (or the network), a Service Request procedure initiated by the UE, a Paging procedure initiated by the AMF (or the network), and a Notification procedure initiated by the AMF (or the network). The MM procedure may include an Attach procedure initiated by the UE, a Detach procedure initiated by the UE or the MME (or the network), a Tracking Area Update procedure initiated by the UE, a Service Request procedure initiated by the UE, and a Paging procedure initiated by the MME (or the network).

Here, in the registration procedure, the UE may transmit a Registration Request message to the AMF, and receive a Registration Accept message or a Registration Reject message transmitted from the AMF, having received the Registration Request message. Here, the AMF may transmit a registration accept message in a case of allowing the registration request from the UE, or may transmit a registration reject message in a case of not allowing the registration request.

In the de-registration procedure initiated by the UE, the UE may transmit a De-registration Request message to the AMF, and receive a De-registration Accept message transmitted from the AMF, having received the De-registration Request message.

In the de-registration procedure initiated by the AMF (or the network), the AMF may transmit the de-registration request message to the UE, and receive the de-registration accept message transmitted from the UE, having received the de-registration request message.

In the generic UE configuration update procedure, the AMF may transmit a Configuration Update Command message to the UE, and receive a Configuration Update Complete message transmitted from the UE, having received the Configuration Update Command message.

In the service request procedure, the UE may transmit a Service Request message or a Control Plane (CP) Service Request message to the AMF, and receive a Service Accept message or a Service Reject message transmitted from the AMF, having received the Service Request message or the Control Plane (CP) Service Request message. Here, the AMF may transmit the registration accept message in a case of allowing the request from the UE, or may transmit the service reject message in a case of not allowing the request from the UE.

In the paging procedure, the AMF may transmit a paging request (Request Paging) to the base station, and the base station may receive the paging request and transmit a Paging message to the UE. The UE may receive the Paging message and transmit the service request message or the CP service request message or the registration request message to the AMF. The AMF may receive the service request message or the CP service Request message or the registration request message.

In the notification procedure, the AMF may transmit a Notification message to the UE, and receive a Notification Response message, or the service request message, or the CP service request message, or the registration request message transmitted from the UE, having received the Notification message.

In the attach procedure, the UE may transmit an Attach Request message and receive an Attach Accept message or an Attach Reject message transmitted from the MME, having received the Attach Request message. Here, the MME may transmit the attach accept message in a case of allowing the request from the UE, or may transmit the attach reject message in a case of not allowing the request from the UE. In a case of receiving the attach accept message, the UE may transmit an Attach Complete message, and the MME may receive the Attach Complete message.

In the detach procedure initiated by the UE, the UE may transmit a Detach Request message and receive a Detach Accept message transmitted from the MME, having received the Detach Request message.

In the detach procedure initiated by the MME (or the network), the MME may transmit the Detach Request message and receive the Detach Accept message transmitted from the UE, having received the Detach Request message.

In a tracking area update procedure, the UE may transmit a Tracking Area Update Request message and receive a Tracking Area Update Accept message or a Tracking Area Update Reject message transmitted from the UE, having received the Tracking Area Update Request message. Here, the MME may transmit the tracking area update accept message in a case of allowing the request from the UE, or may transmit a tracking area update reject message in a case of not allowing the request from the UE. In a case that the UE receives the tracking area update accept message, the UE may transmit the Tracking Area Update Complete message, and the MME may receive the Tracking Area Update Complete message.

In the service request procedure, the UE may transmit the Service Request message or the Control Plane Service Request message or an Extended Service Request message to the AMF, and receive the Service Accept message or the Service Reject message transmitted from the MME, having received the Service Request message or the Control Plane Service Request message or the Extended Service Request message. Here, the MME may transmit the service accept message in a case of allowing the request from the UE, or may transmit the service reject message in a case of not allowing the request from the UE.

In a paging procedure, the MME may transmit a paging request (Request Paging) message to the base station, and the base station may receive the paging request and transmit a Paging message to the UE, the UE may receive the Paging message and transmit the service request message, or the CP service request message, or the extended service request message to the MME. The MME may receive the service request message, or the CP service request message, or the extended service request message.

A Session Management (SM) message (also referred to as a Non-Access-Stratum (NAS) SM message) may be a control message transmitted and/or received between the UE and the SMF via the AMF in an SM procedure, or may be a NAS message (also referred to as a NAS SM message).

The SM procedure (also referred to as the procedure for SM) may include a PDU Session Establishment procedure initiated by the UE, a PDU Session Modification procedure initiated by the UE or SMF (or the network), and a PDU session release procedure (UE-requested PDU Session Release procedure) initiated by the UE or SMF (or the network). The SM procedure may include a PDN connection procedure (PDN connectivity procedure) initiated by the UE, a PDN disconnection procedure (PDN disconnectivity procedure) initiated by the UE, a bearer resource allocation procedure initiated by the UE, a bearer resource modification procedure initiated by the UE, a Default EPS bearer context activation procedure initiated by the NW, a Dedicated EPS bearer context activation procedure initiated by the NW, a Dedicated EPS bearer context modification procedure initiated by the NW, and a Dedicated EPS bearer context deactivation procedure initiated by the NW.

Here, in a PDU session establishment procedure, the UE may transmit a PDU Session Establishment Request message to the SMF, and receive a PDU Session Establishment Accept message or a PDU Session Establishment Reject message transmitted from the SMF, having received the PDU Session Establishment Request message. Here, the SMF transmits the PDU session establishment accept message in a case of allowing a PDU session establishment request from the UE, or may transmit the PDU session establishment reject message in a case of not allowing the PDU session establishment request from the UE.

In the PDU session modification procedure initiated by the UE, the UE may transmit a PDU Session Modification Request message to the SMF, and the SMF may receive the PDU Session Modification Request message and perform the PDU session modification procedure initiated by the SMF or transmit a PDU Session Modification Reject message to the UE. The UE may receive the PDU Session Modification Reject message. Here, the SMF may perform the PDU session modification procedure initiated by the SMF in a case of allowing the PDU session modification request from the UE, or may transmit the PDU session modification reject message in a case of not allowing the PDU session modification request from the UE.

In the PDU session modification procedure initiated by the SMF (or the network), the SMF may transmit a PDU Session Modification Command message to the UE, and receive a PDU Session Modification Complete message or a PDU Session Modification Command Reject message transmitted from the UE, having received the PDU Session Modification Command message. Here, the UE may transmit the PDU session modification complete message in a case of allowing the PDU session modification indication from the SMF, or may transmit the PDU session modification command reject message in a case of not allowing the command.

In the PDU session release procedure initiated by the UE, the UE may transmit a PDU Session Release Request message to the SMF, and the SMF may receive the PDU Session Release Request message and perform the PDU session release procedure initiated by the SMF or transmit a PDU Session Release Reject message to the UE. The UE may receive the PDU Session Release Reject message. Here, the SMF may perform the PDU session release procedure initiated by the SMF in a case of allowing the PDU session release request from the UE, or may transmit the PDU session release reject message in a case of not allowing the PDU session release request.

In the PDU session release procedure initiated by the SMF (or the network), the SMF may transmit a PDU Session Release Command message to the UE, and receive a PDU Session Release Complete message transmitted from the UE, having received the PDU Session Release Command message.

In the PDN connection procedure, the UE may transmit a PDN Connectivity Request message to the MME, and receive an Activate Default EPS Bearer Context Request message or a PDN Connectivity Reject message transmitted from the MME, having received the PDN Connectivity Request message. Here, the MME may transmit the activate default EPS bearer context request message in a case of allowing the request from the UE, or may transmit the PDN connectivity reject message in a case of not allowing the request from the UE.

In the PDN disconnection procedure, the UE may transmit a PDN Disconnect Request message to the MME, and receive a Deactivate EPS Bearer Context Request message or a PDN Disconnect Reject message transmitted from the MME, having received the PDN Disconnect Request message. Here, the MME may transmit the deactivate EPS bearer context request message in a case of allowing the request from the UE, or may transmit the PDN disconnect reject message in a case of not allowing the request from the UE.

In the bearer resource allocation procedure, the UE may transmit a Bearer Resource Allocation Request message to the MME, and receive an Activate Dedicated EPS Bearer Context Request message, or a Modify EPS Bearer Context Request message, or a Bearer Resource Allocation Reject message transmitted from the MME, having received the Bearer Resource Allocation Request message. Here, the MME may transmit the activate dedicated EPS bearer context request message or the modify EPS bearer context request message in a case of allowing the request from the UE, or may transmit the bearer resource allocation reject message in a case of allowing the request from the UE.

In the bearer resource modification procedure, the UE may transmit a Bearer Resource Modification Request message to the MME, and receive an Activate Dedicated EPS Bearer Context Request message, or a Modify EPS Bearer Context Request message, or a Deactivate EPS Bearer Context Request message, or a Bearer Resource Modification Reject message transmitted from the MME, having received the Bearer Resource Modification Request message. Here, the MME may transmit the activate dedicated EPS bearer context Request message, the modify EPS bearer context request message, or the deactivate EPS bearer context request message in a case of allowing the request from the UE, or may transmit the bearer resource modification reject message in a case of allowing the request from the UE.

In the default EPS bearer context activation procedure, the MME may transmit an Activate Default EPS Bearer Context Request message to the UE, and receive an Activate Default EPS Bearer Context Accept message or an Activate Default EPS Bearer Context Reject message transmitted from the UE, having received the Activate Default EPS Bearer Context Request message. Here, the UE may transmit the activate default EPS bearer context accept message in a case of allowing the request from the MME, or may transmit the activate default EPS bearer context reject message in a case of not allowing the request from the MME.

In the dedicated EPS bearer context activation procedure, the MME may transmit an Activate Dedicated EPS Bearer Context Request message to the UE, and receive an Activate Dedicated EPS Bearer Context Accept message or an Activate Dedicated EPS Bearer Context Reject message transmitted from the UE, having received the Activate Dedicated EPS Bearer Context Request message. Here, the UE may transmit the activate dedicated EPS bearer context accept message in a case of allowing the request from the MME, or may transmit the activate dedicated EPS bearer context reject message in a case of not allowing the request from the MME.

In the EPS bearer context modification procedure, the MME may transmit a Modify EPS Bearer Context Request message to the UE, and receive a Modify EPS Bearer Context Accept message or a Modify EPS Bearer Context Reject message transmitted from the UE, having received the Modify EPS Bearer Context Request message. Here, the UE may transmit the modify EPS bearer context accept message in a case of allowing the request from the MME, or may transmit the modify EPS bearer context reject message in a case of not allowing the request from the MME.

In the EPS bearer context deactivation procedure, the MME may transmit a Deactivate EPS Bearer Context Request message to the UE, and may receive a Deactivate EPS Bearer Context Accept message transmitted from the UE, having received the Deactivate EPS Bearer Context Request message.

A 5G System (5GS) service may be a connection service provided using the core network_B 190. In addition, the 5GS service may be a service different from an EPS service, or may be a service similar to the EPS service.

A non 5GS service may be a service other than the 5GS service and may include an EPS service and/or a non EPS service.

A Packet Data Network (PDN) type indicates a type of PDN connection and includes Ipv4, Ipv6, Ipv4v6, and non-IP. In a case that Ipv4 is specified, the specification indicates that transmission and/or reception of data is performed using Ipv4. In a case that Ipv6 is specified, the specification indicates that transmission and/or reception of data is performed using Ipv6. In a case that Ipv4v6 is specified, the specification indicates that transmission and/or reception of data is performed using Ipv4 or Ipv6. In a case that non-IP is specified, the specification indicates that communication is performed using a communication method other than the IP instead of communication using the IP.

Although a Protocol Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using a PDU session.

The MA PDU session may be a PDU session that provides PDU connectivity service, using 3GPP access and/or non-3GPP access.

Note that each apparatus (the UE, and/or the access network apparatus, and/or the core network apparatus) may associate one or more pieces of identification information with a PDU session for management. Note that these pieces of identification information may include one or more of a DNN, a QoS rule, a PDU session type, application identification information, NSI identification information, and access network identification information, and may further include other pieces of information. In addition, in a case that multiple PDU sessions are established, pieces of identification information associated with the PDU sessions may have the same or different details.

The Data Network Name (DNN) may be identification information for identifying the core network and/or an external network such as the DN. The DNN can also be used as information for selecting a gateway such as the PGW_A 30/UPF_A 235 for connecting to the core network B 190. In addition, the DNN may correspond to an Access Point Name (APN).

A Protocol Data Unit/Packet Data Unit (PDU) session type indicates a type of PDU session and includes Ipv4, Ipv6, Ethernet, and Unstructured. In a case that Ipv4 is specified, the specification indicates that transmission and/or reception of data is performed using Ipv4. In a case that Ipv6 is specified, the specification indicates that transmission and/or reception of data is performed using Ipv6. In a case that Ethernet is specified, it indicates that transmission and/or reception of an Ethernet frame is performed. Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both Ipv4 and Ipv6.

Although the PDN connection can be defined as a relationship between the PDN and the UE which is represented by the APN, the PDU connection may be connectivity established between the UE and an external gateway. In the EPS, the UE establishes a PDN session via the access network_A and the core network_A, and can thereby perform transmission and/or reception of user data to and/or from the PDN by using the PDN connection. Here, the external gateway may be a PGW, an SCEF, or the like. The UE can perform transmission and/or reception of user data to and/or from an apparatus deployed in the PDN, such as an application server, by using a PDN connection.

The Public land mobile network (PLMN) is a communication network that provides mobile radio communication services. The PLMN is a network managed by an operator who is a network operator, and the operator can be identified by a PLMN ID. A PLMN that matches a Mobile Network Code (MNC) and a Mobile Country Code (MCC) of an International Mobile Subscriber Identity (IMSI) of the UE may be a Home PLMN (HPLMN). Furthermore, the UE may hold, in the USIM, an Equivalent HPLMN list for identifying one or multiple Equivalent HPLMNs (EPLMNs). A PLMN different from the HPLMN and/or the EPLMN may be a VPLMN (Visited PLMN). A PLMN with which the UE has been successfully registered may be a Registered PLMN (also referred to as a registered PLMN) (RPLMN). Note that a service provided by the PLMN may be referred to as a PLMN service, and a service provided by an SNPN may be referred to as an SNPN service.

A tracking area is a single or multiple ranges that can be expressed using location information of the UE_A 10 managed by the core network. The tracking area may include multiple cells. Furthermore, the tracking area may be a range in which a control message such as paging is broadcast, or may be a range in which the UE_A 10 can move without performing a handover procedure. In addition, the tracking area (also referred to as Tracking Area or TA) may be a routing area, or may be a location area. The tracking area may be any area as long as the area is similar to these. The tracking area may be identified by a Tracking Area Identity (TAI) including a Tracking area code (TAC) and the PLMN.

The registration area (also referred to as Registration area or registration area) is a set of one or multiple TAs allocated to the UE by the AMF. Note that, while moving within one or more TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified with a TAI list including one or more TAIs.

A UE ID is information for identifying the UE. Specifically, the UE ID may be a Subscription Concealed Identifier (SUCI), or a Subscription Permanent Identifier (SUPI), or a Globally Unique Temporary Identifier (GUTI), or an International Mobile Subscriber Identity (IMEI), or an IMEI Software Version (IMEISV), or a Temporary Mobile Subscriber Identity (TMSI), for example. Alternatively, the UE ID may be other information configured by an application or within the network. Moreover, the UE ID may be information for identifying the user.

The UE in a single registration mode has only one active MM state. In other words, the UE in the single registration mode is active only in either the RM state (5GMM state) in the 5GC or the EMM state in the EPC. The UE in the single registration mode is in a 5GC NAS mode in a case of connecting to the 5GC, and is in an EPC NAS mode in a case of connecting to the EPC. The UE in the single registration mode can be registered with only either the 5GC or the EPC, and thus needs to perform mapping between an EPS-GUTI (also referred to as a 4G-GUTI) and a 5G-GUTI in movement between the EPC and the 5GC.

The UE in a dual registration mode may be in a state in which the UE can be independently registered with the 5GC and the EPC. The UE in the dual registration mode can independently maintain the 5G-GUTI and the EPS-GUTI (also referred to as a 4G-GUTI).

The Store and Forward (also referred to as S&F) satellite operation (also referred to as S&F satellite operation mode) may be an operation mode in which existing satellites (also referred to as serving satellites) provide communication services to the UE in a period of time and/or a geographical area in which the serving satellites do not simultaneously connect to a terrestrial network via a feeder link or an inter-satellite link (also referred to as Inter-Satellite Link (ISL)). In the case of uplink (Uplink, also referred to as UL), storing may mean storing UL information from the UE in the satellite, and forwarding may mean forwarding the stored UL information to the terrestrial network. In the case of downlink (Downlink, also referred to as DL), storing may mean storing DL information from the terrestrial network in the satellite, and forwarding may mean forwarding the stored UL information to the UE. The S&F satellite operation mode may be a mode in which one of a service link that is connectivity between the UE and the satellite and a feeder link that is connectivity between the satellite and the network is absent. Note that the store and forward satellite operation may be referred to herein as S&F, S&F function, S&F mode.

A normal satellite operation (also referred to as normal satellite operation or normal satellite operation mode) may be an operation mode different from the S&F satellite operation mode. The normal satellite operation may also be a mode including service link connectivity and feeder link connectivity. The normal satellite operation may be a mode in which the above-described storing and forwarding are not performed. The normal satellite operation may also be an operation mode in which the serving satellites provide communication services to the UE during a period of time and/or in a geographic area in which the serving satellites simultaneously connect to the terrestrial network via the feeder link or the inter-satellite link. The normal satellite operation may also be referred to as a default satellite operation or a default satellite operation mode. Note that the normal satellite operation may be referred to herein as a normal mode or a normal operation mode.

The serving satellite may be a satellite that provides satellite connectivity (e.g., provides a serving cell) to the UE. Depending on the orbit, the serving satellite may cover a certain geographic area for a certain limited period of time. In other words, a UE for which a serving satellite exists may be capable of communication via the satellite, and a UE for which a serving satellite does not exist may be incapable of communication via a satellite. The serving satellite operating in the S&F mode may be in a state including no feeder link connectivity.

The UE satellite UE communication (also referred to as UE-Satellite-UE Communication) may mean communication between UEs using one or more limited serving satellites. The UE-satellite-UE communication may mean communication between UEs utilizing a satellite connection in which user traffic (also referred to as user data) does not pass through a terrestrial segment (including, for example, a core network).

Note that the UE and/or the base station and/or the NW (for example, the MME, the SGW, the PGW, the AMF, the SMF, the UPF, or the like, the same applies hereinafter) may store information in advance and generate new information as necessary. In a case that the information is transmitted and/or received between them, a receiving side may store the received information and perform a behavior based on the information.

The UE and/or the satellite and/or the NW may operate in the S&F mode or may operate in the normal mode.

Only the UE, only the satellite, or only the NW may operate in the S&F mode or in the normal mode. For example, in a case that only the satellite may operate in the S&F mode or in the normal mode, those other than the satellite (in this case, the UE and the NW) may operate neither in the S&F mode nor in the normal mode, and may behave according to the mode in which the satellite operates. In a case that only the UE operates in the S&F mode or in the normal mode, those other than the UE (in this case, the satellite and the NW) may operate neither in the S&F mode nor in the normal mode, and may behave according to the mode of operating with the UE. In a case that only the NW operates in the S&F mode or in the normal mode, those other than the NW (in this case, the UE and the satellite) may operate neither in the S&F mode nor in the normal mode, and may behave according to the mode in which the NW operates.

For simplification, the case where the UE and/or the satellite and/or the NW operates in the S&F mode is expressed in a simplified manner as the case of operating in the S&F mode (the case of not operating in the standard mode), and the like. The case where the UE and/or the satellite and/or the NW operate in the normal mode is expressed in a simplified manner as the case of operating in the normal mode (the case of not operating in the S&F mode).

The UE, and/or the satellite, and/or the NW may operate while switching between the S&F mode and the normal mode. For example, in a case that the UE and/or the satellite and/or the NW is operating in the normal mode, a certain procedure may be initiated, and during the performance of the procedure, the mode may be switched from the normal mode to the S&F mode. In a case that the UE and/or the satellite and/or the NW operate in the S&F mode, a certain procedure may be initiated, and during the performance of the procedure, the mode may be switched from the S&F mode to the normal mode.

### 3. First Embodiment

First, description will be given of the behaviors of the UE, the satellite, and the NW (for example, the MME, the SGW, the PGW, the AMF, the SMF, the UPF, or the like, the same applies hereinafter) related to the transmission of the MM message or the SM message (also referred to as a first control message) in the MM procedure or the SM procedure initiated by the UE or the transmission of the user data (also referred to as Mobile originated (MO) data or uplink data) initiated by the UE.

The UE and/or the satellite and/or the NW may behave based on information that the UE and/or the satellite and/or the NW itself knows and/or information that is transmitted and/or received.

Note that, in the present embodiment, unless otherwise specified, the description assumes that the UE and/or the satellite and/or the NW supports the S&F function or the S&F mode.

The UE may be capable of communicating with a satellite equipped with the function of the base station apparatus.

The UE may transmit, to the satellite and/or the NW, information indicating whether the S&F function or the S&F mode is supported. The UE may include this information in the NAS message and/or in the control information and/or control message for any of the layers below the NAS layer (e.g., physical layer, MAC layer, RLC layer, PDCP layer, RRC layer) for transmission. For example, the control message for the RRC layer may be RRC signalling (also referred to as an RRC message), and the control information for the RRC layer may be system information. The NAS message may be, for example, an MM message and/or an SM message. In a case that the UE supports the S&F function or the S&F mode, the UE may transmit, to the satellite and/or the NW, information indicating that the S&F function or the S&F mode is supported. By receiving the control information, the satellite and/or the NW may recognize whether the UE supports the S&F function or the S&F mode and store the recognized information.

The satellite may include information indicating whether the S&F function or the S&F mode is supported in the NAS message and/or in the control information and/or the control message for any of the layers below the NAS layer, and transmit the NAS message and/or the control information and/or the control message to the UE and/or the NW. For example, the control message for the RRC layer may be RRC signalling (also referred to as an RRC message), and the control information for the RRC layer may be system information. The NAS message may be, for example, an MM message and/or an SM message. In a case of supporting the S&F function or the S&F mode, the satellite may transmit, to the UE and/or the NW, information indicating that the S&F function or the S&F mode is supported. By receiving the control information, the UE and/or the NW may recognize whether the satellite supports the S&F function or the S&F mode and store the recognized information.

The NW may include, in the control information and/or the control message for the NAS layer, information indicating whether the S&F function or the S&F mode is supported, and transmit the control information and/or the control message to the UE and/or the satellite. For example, the control message for the NAS layer may be an MM message and/or an SM message. In a case that the NW supports the S&F function or the S&F mode, the NW may transmit, to the UE and/or the satellite, information indicating that the S&F function or the S&F mode is supported. By receiving the control information, the UE and/or the satellite may recognize whether the NW supports the S&F function or the S&F mode and store the recognized information.

The satellite may include, in the information in the NAS message, and/or the control information and/or the control message for any of the layers below the NAS layer (for example, physical layer, MAC layer, RLC layer, PDCP layer, or RRC layer), information indicating whether the satellite is operating in the S&F mode, and/or information indicating whether the service link is available, and/or information indicating whether the feeder link is available, and/or information indicating whether the satellite is operating in the normal mode, and/or information indicating a point of time at which and/or a period of time in which the S&F mode is applied (application of the normal mode is canceled), and/or information indicating a point of time at which and/or a period of time in which the application of the S&F mode is canceled (the normal mode is applied), and transmit the message to the UE and/or the NW. For example, the control message for the RRC layer may be an RRC message, and the control information for the RRC layer may be system information. The NAS message may be, for example, an MM message and/or an SM message. These pieces of information may be transmitted periodically or may be transmitted each time an event occurs. Here, the event may be, for example, the case where the mode is changed (the case where a change into the S&F mode or the normal mode occurs), the case where the state of the service link is changed (the case where the service link becomes available or unavailable), the case where the state of the feeder link is changed (the case where the feeder link becomes available or unavailable), or the like. Here, the satellite may determine whether to transmit at least a part of the information to the UE based on the information, which is received from the UE and/or the NW, indicating whether the S&F function or the S&F mode is supported. For example, in a case of receiving the information indicating that the UE and/or the NW supports the S&F function or the S&F mode, the satellite may determine whether to transmit at least a part of the information to the UE, and then the satellite may transmit the information to the UE and/or the NW in a case that the information is determined to be transmitted, or may not transmit the information to the UE and/or the NW in a case that the information is determined not to be transmitted.

In a case that at least a part of the information has not been transmitted to the UE and/or the NW yet, or in a case that at least a part of the information has been updated, the satellite may determine to transmit the information to the UE and/or the NW. In a case that at least a part of the information has already been transmitted to the UE and/or the NW, or in a case that the transmitted information has not been updated, the satellite may determine not to transmit the information to the UE and/or the NW.

The information indicating whether the operation is in the S&F mode may be interchangeably interpreted as information indicating that the operation is in the S&F mode or information indicating that the operation is not in the S&F mode. The information indicating whether the service link is available (also referred to as whether connectivity of the service link is present) may be interchangeably interpreted as information indicating that the service link is available (also referred to as connectivity of the service link being present) or information indicating that the service link is not available (also referred to as connectivity of the service link being absent). The information indicating whether the feeder link is available (also referred to as whether connectivity of the feeder link is present) may be interchangeably interpreted as information indicating that the feeder link is available (also referred to as connectivity of the feeder link being present) or information indicating that the feeder link is not available (also referred to as connectivity of the feeder link being absent). The information indicating whether the operation is in the normal mode may be interchangeably interpreted as information indicating that the operation is in the normal mode or information indicating that the operation is not in the normal mode.

For example, in a case that the satellite is operating in the S&F mode, the satellite may transmit, to the UE and/or the NW, information indicating that the satellite is operating in the S&F mode and/or information indicating that the satellite is not operating in the normal mode. By receiving at least one of these pieces of control information, the UE and/or the NW may recognize that the satellite is operating in the S&F mode and/or the satellite is not operating in the normal mode, and store the recognized information.

In a case that the satellite is operating in the normal mode, the satellite may transmit, to the UE and/or the NW, information indicating that the satellite is operating in the normal mode and/or information indicating that the satellite is not operating in the S&F mode. By receiving at least one of these pieces of control information, the UE and/or the NW may recognize that the satellite is not operating in the S&F mode and/or the satellite is operating in the normal mode, and store the recognized information.

In a case that the satellite is operating in the S&F mode, the service link is available, and the feeder link is not available, the satellite may transmit, to the UE, information indicating that the satellite is operating in the S&F mode, and/or information indicating that the satellite is not operating in the normal mode, and/or information indicating that the service link is available, and/or information indicating that the feeder link is not available. By receiving at least one of these pieces of control information, the UE and/or the NW may recognize that the satellite is operating in the S&F mode and/or the satellite is not operating in the normal mode and/or the service link is available and/or the feeder link is not available, and store the recognized information.

In a case that the satellite is operating in the S&F mode, the service link is not available, and the feeder link is available, the satellite may transmit, to the NW, information indicating that the satellite is operating in the S&F mode, and/or information indicating that the satellite is not operating in the normal mode, and/or information indicating that the service link is not available, and/or information indicating that the feeder link is available. By receiving at least one of these pieces of control information, the UE and/or the NW may recognize that the satellite is operating in the S&F mode and/or the satellite is not operating in the normal mode and/or the service link is not available and/or the feeder link is available, and store the recognized information.

In a case that the satellite is operating in the normal mode, the satellite may transmit, to the UE and/or the NW, information indicating that the satellite is operating in the normal mode, and/or information indicating that the satellite is not operating in the S&F mode, and/or information indicating that the service link is available, and/or information indicating that the feeder link is available. By receiving at least one of these pieces of control information, the UE and/or the NW may recognize that the satellite is not operating in the S&F mode, and/or the satellite is operating in the normal mode, and/or the service link is available, and/or the feeder link is available, and store the recognized information.

The satellite may transmit, to the UE and/or the NW, information indicating the point of time and/or the period of time for applying the S&F mode (canceling the application of the normal mode) and/or information indicating the point of time and/or the period of time for canceling the application of the S&F mode (applying the normal mode).

For example, in a case that a satellite operating in the normal mode attempts to operate in the S&F mode, the satellite may transmit information indicating the point of time and/or the period of time for applying the S&F mode (canceling the application of the normal mode). By receiving at least one of these pieces of control information, the UE and/or the NW may recognize that the S&F mode is applied, and/or that the application of the normal mode is canceled, and/or the point of time and/or the period of time for applying the S&F mode, and store the recognized information.

In a case that the satellite operating in the S&F mode attempts to operate in the normal mode, the satellite may transmit information indicating the point of time and/or the period of time for canceling the application of the S&F mode (applying the normal mode). By receiving at least one of these pieces of control information, the UE and/or the NW may recognize and store that the application of the S&F mode is canceled, and/or that the normal mode is applied, and/or the point of time and/or the period of time for applying the normal mode.

In a case that the UE and/or the NW operating in the normal mode does not receive the information indicating that the UE and/or the NW is operating in the S&F mode and/or the information indicating that the UE and/or the NW is not operating in the normal mode, the UE and/or the NW may recognize that the UE and/or the NW is operating in the normal mode, and store the recognized information.

In a case that the UE and/or the NW operating in the S&F mode does not receive the information indicating that the UE and/or the NW is not operating in the S&F mode and/or the information indicating that the UE and/or the NW is operating in the normal mode, the UE and/or the NW may recognize that the UE and/or the NW is operating in the S&F mode, and store the recognized information.

In a case that the UE and/or the NW operating in the normal mode does not receive the information indicating that the service link is not available or the information indicating that the feeder link is not available, the UE and/or the NW may recognize that the UE and/or the NW is operating in the normal mode, store the recognized information, and perform behavior in the normal mode.

In a case that the UE and/or the NW operating in the S&F mode does not receive the information indicating that the service link is available and the information indicating that the feeder link is available, the UE and/or the NW may recognize that the UE and/or the NW is operating in the S&F mode, store the recognized information, and perform the behavior in the S&F mode.

In a case of operating in the normal mode, the UE and/or the satellite and/or the NW may transmit and/or receive control messages (e.g., MM messages and/or SM messages) and user data.

The UE and/or the satellite and/or the NW may include, in a first control message to an eighth control message described below, the information indicating whether the operation is in the S&F mode, and/or the information indicating whether the service link is available, and/or the information indicating whether the feeder link is available, and/or the information indicating whether the operation is in the normal mode, and/or the information indicating the point of time and/or the period of time for applying the S&F mode, and/or the information indicating the point of time and/or the period of time for canceling the application of the S&F mode, and transmit and/or receive the control messages, or may include the information in a control message different from the first to eighth control messages described below, and transmit and/or receive the different control message. For example, before the first control message is transmitted and/or received, the information may be included in a control message different from the first to eighth control messages described below, and the different control message may be transmitted and/or received. For example, after the first control message is transmitted and/or received and before the eighth control message is transmitted and/or received, the information may be included in a control message different from the first to eighth control messages described below, and the different control message may be transmitted and/or received. For example, after the eighth control message is transmitted and/or received, the information may be included in a control message different from the first to eighth control messages described below, and the different control message may be transmitted and/or received.

In a case that the UE is operating in the S&F mode (in a case that the service link is not available but the feeder link is available), the UE may not transmit, to the NW via the satellite, an MM message or an SM message (also referred to as a first control message) or user data (also referred to as Mobile originated (MO) data or uplink data) in the MM procedure or the SM procedure initiated by the UE.

In a case that the UE is operating in the S&F mode (in a case that the service link is available but the feeder link is not available), the UE may not transmit the first control message or the user data to the NW via the satellite.

In a case that the UE is operating in the S&F mode (in a case that the service link is available but the feeder link is not available) or in a case that the UE is operating in the normal mode, the UE may transmit the first control message or the user data to the NW via the satellite. Note that the UE may start a timer (also referred to as a first timer) based on the transmission of the first control message or the user data.

In a case that the UE transmits the first control message or the user data to the NW via the satellite while operating in the S&F mode (in a case that the service link is available but the feeder link is not available), the satellite may transmit a control message (also referred to as a second control message) including information indicating that the first control message or the user data has failed to be forwarded, and/or information indicating that the first control message or the user data fails to be forwarded because the feeder link is not available, and the like, to the UE as a response to the received first control message or the received user data. The second control message may be, for example, a control message for any of the layers below the NAS layer (e.g., physical layer, MAC layer, RLC layer, PDCP layer, RRC layer) but may be a control message for the NAS layer (NAS message). Based on the reception of the second control message and/or the control information included in the second control message, the UE may recognize that the MM procedure or the SM procedure initiated by the UE has been rejected, may stop the second timer operating in the UE, may recognize that the first control message or the user data has not been forwarded to the NW, may retransmit the first control message or the user data immediately or after waiting for a prescribed period of time (also referred to as a second prescribed period of time), may perform the same procedure or retransmit the user data after waiting for the second prescribed period of time, may perform the same procedure or retransmit the user data in a case that switching to the operation in the normal mode occurs, or may perform, while operating in the S&F mode, the same procedure or retransmit the user data in a case that the feeder link becomes available.

In a case that the UE transmits the first control message or the user data to the NW via the satellite while the operation is in the S&F mode (in a case that the service link is available but the feeder link is not available), the satellite may store the received first control message or user data for a prescribed period of time (also referred to as a first prescribed period of time). In this case, the satellite may transmit, to the UE, a control message (also referred to as a third control message) including information indicating that the feeder link is not available, and/or information indicating that the first control message or the user data has been stored, and/or information indicating that the first control message or the user data has been stored because the feeder link is not available, and/or the first prescribed period of time (that is, the period of time for storing), and the like. The third control message may be a control message for any of the layers below the NAS layer (e.g., physical layer, MAC layer, RLC layer, PDCP layer, RRC layer) but may be a control message for the NAS layer. Note that the first prescribed period of time may be included in the third control message as a timer value. Based on the reception of the third control message and/or the control information included in the third control message, the UE may recognize information indicating that the feeder link is not available, and/or information indicating that the first control message or the user data has been stored, and/or information indicating that the first control message or the user data has been stored because the feeder link is not available, and/or the first prescribed period of time, and the like. The first prescribed period of time may be a period of time determined in advance in accordance with a standard or may be a period of time dependent on implementation of the satellite. Furthermore, the UE may start a timer (also referred to as a second timer) based on the reception of the third control message and/or the control information included in the third control message. At this time, the UE may start the second timer using the first prescribed period of time (or timer value) received from the satellite. The satellite may start a timer (also referred to as a third timer) based on the transmission of the third control message and/or the control information included in the third control message and/or the storage of the first control message or the user data. At this time, the satellite may start the third timer using the first prescribed period of time (or timer value) transmitted to the UE. Note that the third control message and/or at least one piece of control information included in the third control message may be referred to as a store indication or an Access Stratum (AS) indication.

Further, in a case that the feeder link does not become available within the first prescribed period of time, the satellite may discard or delete the first control message and/or the control information included in the first control message or the user data, which has been received from the UE and stored in the satellite, and the satellite may transmit the second control message to the UE as a response to the received first control message or the received user data. Note that the satellite may manage the first prescribed period of time using a timer (third timer). That is, "in a case that the feeder link does not become available within the first prescribed period of time" may be interchangeably interpreted as "in a case that the feeder link does not become available after the third timer using the first prescribed period of time is started and before the third timer expires". In a case that the UE receives the second control message and/or the control information included in the second control message before the second timer expires, the UE may recognize that the MM procedure or the SM procedure initiated by the UE has been rejected, may stop the second timer operating in the UE, may recognize that the first control message or the user data has not been forwarded to the NW, may retransmit the first control message or the user data immediately or after waiting for a prescribed period of time (also referred to as a second prescribed period of time), may perform the same procedure or retransmit the user data after waiting for the second prescribed period of time, may perform the same procedure or retransmit the user data in a case that switching to the operation in the normal mode occurs, or may perform, while operating in the S&F mode, the same procedure or retransmit the user data in a case that the feeder link becomes available.

In a case that the feeder link becomes available within the first prescribed period of time, the satellite may transmit (that is, forward) the first control message, and/or the control information included in the first control message, or the user data, which has been received from the UE and stored to NW. In this case, the satellite may transmit, to the UE, a control message (also referred to as a fourth control message) including information indicating that the first control message or the user data has been forwarded because the feeder link has become available, information indicating that the stored first control message or user data has been forwarded, or the like. The fourth control message may be a control message for any of the layers below the NAS layer (e.g., physical layer, MAC layer, RLC layer, PDCP layer, RRC layer) but may be a control message for the NAS layer. Note that the satellite may manage the first prescribed period of time using a timer (third timer). That is, "in a case that the feeder link becomes available within the first prescribed period of time" may be interchangeably interpreted as "in a case that the feeder link becomes available after the third timer using the first prescribed period of time is started and before the third timer expires". Note that the fourth control message or at least one piece of control information included in the fourth control message may be referred to as a forward indication or an Access Stratum (AS) indication. Based on the reception of the fourth control message and/or the control information included in the fourth control message, the UE may stop the second timer operating in the UE, may recognize that the first control message or the user data has been forwarded to the NW, or may recognize that the first control message or the user data need not be retransmitted. The satellite may stop the third timer operating in the satellite, based on the transmission of the fourth control message and/or the control information included in the fourth control message. Note that the case where the feeder link becomes available may mean the case where switching to the operation in the normal mode occurs, or the case where the feeder link becomes available while the operation is in the S&F mode.

In a case that the UE does not receive the fourth control message from the satellite until the second timer that is in operation expires, the UE may recognize that the MM procedure or the SM procedure initiated by the UE has been rejected, may stop the second timer that is in operation, may recognize that the first control message or the user data has not been forwarded to the NW, may retransmit the first control message or the user data immediately or after waiting for a second prescribed period of time, may perform the same procedure or retransmit the user data after waiting for the second prescribed period of time, may perform the same procedure or retransmit the user data in a case that switching to the operation in the normal mode occurs, or may perform, while operating in the S&F mode, the same procedure or retransmit the user data in a case that the feeder link becomes available.

Note that, in a case that the UE starts the second timer, the UE may suspend the first timer that is in operation. In a case that the second timer is stopped or in a case that the second timer expires, the UE may resume the suspended counting of the first timer.

The NW may receive, from the satellite, the first control message or the user data in the MM procedure or the SM procedure initiated by the UE.

In the MM procedure or the SM procedure initiated by the UE, in a case of operating in the S&F mode (in a case that the service link is available but the feeder link is not available) after receiving the first control message from the satellite, the NW may not transmit the MM message or the SM message (also referred to as a fifth control message) to the UE via the satellite as a response to the first control message.

In the MM procedure or the SM procedure initiated by the UE, in a case of operating in the S&F mode (in a case that the service link is not available but the feeder link is available) after receiving the first control message from the satellite, the NW may not transmit the fifth control message to the UE via the satellite as a response to the first control message.

In the MM procedure or the SM procedure initiated by the UE, in a case of operating in the S&F mode (in a case that the service link is not available but the feeder link is available) or in the normal mode after receiving the first control message from the satellite, the NW may transmit the fifth control message to the UE via the satellite as a response to the first control message.

In a case that the NW transmits the fifth control message to the UE via the satellite while operating in the S&F mode (in a case that the service link is not available but the feeder link is available), the satellite may transmit, to the NW, a control message (also referred to as a sixth control message) including information indicating that the fifth control message has failed to be forwarded, information indicating that the fifth control message fails to be forwarded because the service link is not available, and/or the like, as a response to the received fifth control message. The sixth control message may be, for example, a control message for the NAS layer (NAS message). Based on the reception of the sixth control message and/or the control information included in the sixth control message, the NW may recognize that the MM procedure or the SM procedure initiated by the UE has been rejected, may stop the fourth timer operating in the NW, may recognize that the fifth control message has not been forwarded to the UE, may retransmit the fifth control message immediately or after waiting for a prescribed period of time (also referred to as a fourth prescribed period of time), may retransmit the fifth control message in a case that switching to the operation in the normal mode occurs, or may retransmit, while operating in the S&F mode, the fifth control message in a case that the service link becomes available.

In a case that the NW transmits the fifth control message to the UE via the satellite while operating in the S&F mode (in a case that the service link is not available but the feeder link is available), the satellite may store the received fifth control message for a prescribed period of time (also referred to as a third prescribed period of time). In this case, the satellite may transmit, to the NW, a control message (also referred to as a seventh control message) including information indicating that the service link is not available, and/or information indicating that the fifth control message has been stored, and/or information indicating that the fifth control message has been stored because the service link is not available, and/or the third prescribed period of time (that is, a period of time for storing), and the like. The seventh control message may be, for example, a NAS message. Note that the third prescribed period of time may be included in the seventh control message as a timer value. Based on the reception of the seventh control message and/or the control information included in the seventh control message, the NW may recognize information indicating that the service link is not available, and/or information indicating that the seventh control message has been stored, and/or information indicating that the seventh control message has been stored because the service link is not available, and/or the third prescribed period of time, and the like. The third prescribed period of time may be a period of time determined in advance in accordance with a standard or may be a period of time dependent on implementation of the satellite. Furthermore, the NW may start a timer (also referred to as a fourth timer) based on the reception of the seventh control message and/or the control information included in the seventh control message. At this time, the NW may start the fourth timer using the third prescribed period of time (or timer value) received from the satellite. The satellite may start a timer (also referred to as a fifth timer) based on the transmission of the seventh control message and/or the control information included in the seventh control message and/or the storage of the fifth control message. At this time, the satellite may start the fifth timer using the third prescribed period of time (or timer value) transmitted to the NW. Note that the seventh control message and/or at least one piece of control information included in the seventh control message may be referred to as a store indication or an Access Stratum (AS) indication.

Further, in a case that the service link does not become available within the third prescribed period of time, the satellite may discard or delete the fifth control message and/or the control information included in the fifth control message, which has been received from the NW and stored, and transmit a sixth control message to the NW as a response to the received fifth control message. Note that the satellite may manage the third prescribed period of time using a timer (fifth timer). That is, "in a case that the service link does not become available within the third prescribed period of time" may be interchangeably interpreted as "in a case that the service link does not become available after the fifth timer using the third prescribed period of time is started and before the fifth timer expires". Based on the reception of the sixth control message and/or the control information included in the sixth control message, the NW may recognize that the MM procedure or the SM procedure initiated by the UE has been rejected, may stop the fourth timer operating in the NW, may recognize that the fifth control message has not been forwarded to the UE, may retransmit the fifth control message immediately or after waiting for a prescribed period of time (also referred to as a fourth prescribed period of time), may retransmit the fifth control message in a case that switching to the operation in the normal mode occurs, or may retransmit, while operating in the S&F mode, the fifth control message in a case that the service link becomes available.

In a case that the service link becomes available within the third prescribed period of time, the satellite may transmit (that is, forward), to the UE, the fifth control message and/or the control information included in the fifth control message, which has been received from the NW and stored. In this case, the satellite may transmit, to the NW, a control message (also referred to as an eighth control message) including information indicating that the fifth control message has been forwarded because the service link has become available, information indicating that the stored fifth control message has been forwarded, or the like. The eighth control message may be, for example, a NAS message. Note that the satellite may manage the third prescribed period of time using a timer (fifth timer). That is, "in a case that the service link becomes available within the third prescribed period of time" may be interchangeably interpreted as "in a case that the service link becomes available after the fifth timer using the third prescribed period of time is started and before the fifth timer expires". Note that the eighth control message or at least one piece of control information included in the eighth control message may be referred to as a forward indication or an Access Stratum (AS) indication. Based on the reception of the eighth control message and/or the control information included in the eighth control message, the NW may stop the fourth timer operating in the NW, may recognize that the fifth control message has been forwarded to the UE, or may recognize that the fifth control message need not be retransmitted. The satellite may stop the fifth timer operating in the satellite, based on the transmission of the eighth control message and/or the control information included in the eighth control message. Note that the case where the service link becomes available may mean the case where switching to the operation in the normal mode occurs, or the case where the service link becomes available while the operation is in the S&F mode.

In a case that the NW does not receive the eighth control message from the satellite before the fourth timer that is in operation expires, the NW may recognize that the MM procedure or the SM procedure initiated by the UE has been rejected, may stop the fourth timer that is in operation in the NW, may recognize that the fifth control message has not been forwarded to the UE, may retransmit the fifth control message immediately or after waiting for a fourth prescribed period of time, may retransmit the fifth control message in a case that switching to the operation in the normal mode occurs, or may retransmit, while operating in the S&F mode, the fifth control message in a case that the service link becomes available.

In a case that the UE receives the fifth control message from the NW via the satellite before the first timer that is in operation expires, the UE may recognize that the MM procedure or the SM procedure initiated by the UE has been normally terminated.

In a case that the UE does not receive the fifth control message from the NW via the satellite until the first timer that is in operation expires, the UE may recognize that the MM procedure or the SM procedure initiated by the UE has been normally terminated.

Note that the first control message may be the registration request message and that the fifth control message may be the registration accept message or the registration reject message. In this case, the first timer may be a T3510 timer.

The first control message may be the de-registration request message, and the fifth control message may be the de-registration accept message. In this case, the first timer may be a T3521 timer.

The first control message may be the de-registration request message, and the fifth control message may not be present. In this case, the first timer may not be present.

The first control message may be the service request message or the CP service request message, and the fifth control message may be the service accept message or the service reject message. In this case, the first timer may be a T3517 timer.

The first control message may be the uplink (UL) NAS transport message, and the fifth control message may not be present. In this case, the first timer may not be present.

The first control message may be the PDU session establishment request message, and the fifth control message may be the PDU session establishment accept message or the PDU session establishment reject message. The first timer may be a T3580 timer.

The first control message may be the PDU session modification request message, and the fifth control message may be the PDU session modification command message or the PDU session modification reject message. In this case, the first timer may be a T3581 timer.

The first control message may be the PDU session release request message, and the fifth control message may be the PDU session release command message or the PDU session release reject message. In this case, the first timer may be a T3582 timer.

The first control message may be the attach request message, and the fifth control message may be the attach accept message or the attach reject message. In this case, the first timer may be a T3410.

The first control message may be the detach request message, and the fifth control message may not be present. In this case, the first timer may not be present.

The first control message may be the detach request message, and the fifth control message may be the detach accept message. In this case, the first timer may be a T3421.

The first control message may be the tracking area update request message, and the fifth control message may be the tracking area update accept message or the tracking area update reject message. In this case, the first timer may be a T3430.

The first control message may be the service request message, or the CP service request message, or the extended service request message, and the fifth control message may be the service accept message or the service reject message. In this case, the first timer may be a T3417.

The first control message may be the PDN connectivity request message, and the fifth control message may be the activate default EPS bearer context request message or the PDN connectivity reject message. In this case, the first timer may be a T3482.

The first control message may be the PDN disconnection request message, and the fifth control message may be the deactivate EPS bearer context request message or the PDN disconnection reject message. In this case, the first timer may be a T3492.

The first control message may be the bearer resource allocation request message, and the fifth control message may be the activate dedicated EPS bearer context request message, or the modified EPS bearer context request message, or the bearer resource allocation reject message. In this case, the first timer may be a T3480.

The first control message may be the bearer resource modification request message, and the fifth control message may be the activate dedicated EPS bearer context request message, or the modify EPS bearer context request message, or the deactivate EPS bearer context request message, or the bearer resource modification reject message. In this case, the first timer may be a T3481.

In a case of receiving the second control message from the satellite, the UE may extend the first timer that is in operation, instead of starting the second timer. For example, the UE may extend the first timer indefinitely or for a period of time until the fifth control message is received.

The first to eighth control messages may include not only control information but also user data.

The behaviors of the UE, the satellite, and the NW operating in the S&F mode can also be applied in a case that an attempt is being made to operate in the normal mode or switching to the operation in the normal mode occurs before or during the performance of the procedure or the transmission of the user data.

The behaviors of the UE, the satellite, and the NW operating in the normal mode can also be applied in a case that an attempt is being made to operate in the S&F mode or switching to the operation in the S&F mode occurs before or during the performance of the procedure or the transmission of the user data.

Note that the above may be applied not only to the PLMN but also to the NPN (SNPN and/or PNI-NPN).

The above may be applied only to the 3GPP access, may be applied only to the non-3GPP access, or may be applied to both the 3GPP access and the non-3GPP access.

The present embodiment may be performed multiple times, the second embodiment may be performed one or more times after the present embodiment is performed one or more times, or the present embodiment may be performed one or more times after the second embodiment is performed one or more times.

### 4. Second Embodiment

Next, description will be given of the behaviors of the UE, the satellite, and the NW (for example, the MME, the AMF, the SMF, the UPF, or the like, the same applies hereinafter) related to the transmission of the MM message or the SM message (also referred to as a first control message) or the user data (also referred to as Mobile terminated (MT) data or downlink data) in the MM procedure or the SM procedure initiated by the NW.

Note that, in the present embodiment, unless otherwise specified, the description assumes that the UE and/or the satellite and/or the NW supports the S&F function or the S&F mode.

The UE may be capable of communicating with a satellite equipped with the function of the base station apparatus.

The UE and/or the satellite and/or the NW may behave based on information that the UE and/or the satellite and/or the NW itself knows and/or information that is transmitted and/or received.

The UE may transmit, to the satellite and/or the NW, information indicating whether the S&F function or the S&F mode is supported. The UE may include this information in the NAS message and/or in the control information and/or control message for any of the layers below the NAS layer (e.g., physical layer, MAC layer, RLC layer, PDCP layer, RRC layer) for transmission. For example, the control message for the RRC layer may be RRC signalling (also referred to as an RRC message), and the control information for the RRC layer may be system information. The NAS message may be, for example, an MM message and/or an SM message. In a case that the UE supports the S&F function or the S&F mode, the UE may transmit, to the satellite and/or the NW, information indicating that the S&F function or the S&F mode is supported. By receiving the control information, the satellite and/or the NW may recognize whether the UE supports the S&F function or the S&F mode and store the recognized information.

The satellite may include information indicating whether the S&F function or the S&F mode is supported in the NAS message and/or in the control information and/or the control message for any of the layers below the NAS layer, and transmit the NAS message and/or the control information and/or the control message to the UE and/or the NW. For example, the control message for the RRC layer may be RRC signalling (also referred to as an RRC message), and the control information for the RRC layer may be system information. The NAS message may be, for example, an MM message and/or an SM message. In a case of supporting the S&F function or the S&F mode, the satellite may transmit, to the UE and/or the NW, information indicating that the S&F function or the S&F mode is supported. By receiving the control information, the UE and/or the NW may recognize whether the satellite supports the S&F function or the S&F mode and store the recognized information.

The NW may include, in the control information and/or the control message for the NAS layer, information indicating whether the S&F function or the S&F mode is supported, and transmit the control information and/or the control message to the UE and/or the satellite. For example, the control message for the NAS layer may be an MM message and/or an SM message. In a case that the NW supports the S&F function or the S&F mode, the NW may transmit, to the UE and/or the satellite, information indicating that the S&F function or the S&F mode is supported. By receiving the control information, the UE and/or the satellite may recognize whether the NW supports the S&F function or the S&F mode and store the recognized information.

The satellite may include, in the information in the NAS message, and/or the control information and/or the control message for any of the layers below the NAS layer (for example, physical layer, MAC layer, RLC layer, PDCP layer, or RRC layer), information indicating whether the satellite is operating in the S&F mode, and/or information indicating whether the service link is available, and/or information indicating whether the feeder link is available, and/or information indicating whether the satellite is operating in the normal mode, and/or information indicating a point of time at which and/or a period of time in which the S&F mode is applied (application of the normal mode is canceled), and/or information indicating a point of time at which and/or a period of time in which the application of the S&F mode is canceled (the normal mode is applied), and transmit the message to the UE and/or the NW. For example, the control message for the RRC layer may be an RRC message, and the control information for the RRC layer may be system information. The NAS message may be, for example, an MM message and/or an SM message. These pieces of information may be transmitted periodically or may be transmitted each time an event occurs. Here, the event may be, for example, the case where the mode is changed (the case where a change into the S&F mode or the normal mode occurs), the case where the state of the service link is changed (the case where the service link is available or unavailable), the case where the state of the feeder link is changed (the case where the feeder link is available or unavailable), or the like. Here, the satellite may determine whether to transmit at least a part of the information to the UE based on the information which is received from the UE and/or the NW and indicating whether the S&F function or the S&F mode is supported. For example, in a case of receiving the information indicating that the UE and/or the NW supports the S&F function or the S&F mode, the satellite may determine whether to transmit at least a part of the information to the UE, and transmit the information to the UE and/or the NW in a case that the information is determined to be transmitted, or may not transmit the information to the UE and/or the NW in a case that the information is determined not to be transmitted. In a case that at least a part of the information has not been transmitted to the UE and/or the NW yet or in a case that at least a part of the information has been updated, the UE may determine to transmit the information to the UE and/or the NW. In a case that at least a part of the information has already been transmitted to the UE and/or the NW, or in a case that the transmitted information has not been updated, the information may be determined not to be transmitted to the UE and/or the NW.

The information indicating whether the operation is in the S&F mode may be interchangeably interpreted as information indicating that the operation is in the S&F mode or information indicating that the operation is not in the S&F mode. The information indicating whether the service link is available (also referred to as whether connectivity of the service link is present) may be interchangeably interpreted as information indicating that the service link is available (also referred to as connectivity of the service link being present) or information indicating that the service link is not available (also referred to as connectivity of the service link being absent). The information indicating whether the feeder link is available (also referred to as whether connectivity of the feeder link is present) may be interchangeably interpreted as information indicating that the feeder link is available (also referred to as connectivity of the feeder link being present) or information indicating that the feeder link is not available (also referred to as connectivity of the feeder link being absent). The information indicating whether the operation is in the normal mode may be interchangeably interpreted as information indicating that the operation is in the normal mode or information indicating that the operation is not in the normal mode.

For example, in a case that the satellite is operating in the S&F mode, the satellite may transmit, to the UE and/or the NW, information indicating that the satellite is operating in the S&F mode and/or information indicating that the satellite is not operating in the normal mode. By receiving at least one of these pieces of control information, the UE and/or the NW may recognize that the UE and/or the NW is operating in the S&F mode and/or is not operating in the normal mode, and store the recognized information.

In a case that the satellite is operating in the normal mode, the satellite may transmit, to the UE and/or the NW, information indicating that the satellite is operating in the normal mode and/or information indicating that the satellite is not operating in the S&F mode. By receiving at least one of these pieces of control information, the UE and/or the NW may recognize that the UE and/or the NW is not operating in the S&F mode and/or is operating in the normal mode, and store the recognized information.

In a case that the satellite is operating in the S&F mode, the service link is available, and the feeder link is not available, the satellite may transmit, to the UE, information indicating that the satellite is operating in the S&F mode, and/or information indicating that the satellite is not operating in the normal mode, and/or information indicating that the service link is available, and/or information indicating that the feeder link is not available. By receiving at least one of these pieces of control information, the UE and/or the NW may recognize that the UE and/or the NW is operating in the S&F mode and/or is not operating in the normal mode and/or the service link is available and/or the feeder link is not available, and store the recognized information.

In a case that the satellite is operating in the S&F mode, the service link is not available, and the feeder link is available, the satellite may transmit, to the NW, information indicating that the satellite is operating in the S&F mode, and/or information indicating that the satellite is not operating in the normal mode, and/or information indicating that the service link is not available, and/or information indicating that the feeder link is available. By receiving at least one of these pieces of control information, the UE and/or the NW may recognize that the UE is operating in the S&F mode and/or the UE is not operating in the normal mode and/or the service link is not available and/or the feeder link is available, and store the recognized information.

In a case that the satellite is operating in the normal mode, the satellite may transmit, to the UE and/or the NW, information indicating that the satellite is operating in the normal mode, and/or information indicating that the satellite is not operating in the S&F mode, and/or information indicating that the service link is available, and/or information indicating that the feeder link is available. By receiving at least one of these pieces of control information, the UE and/or the NW may recognize that the UE and/or the NW is not operating in the S&F mode, and/or is operating in the normal mode, and/or the service link is available, and/or the feeder link is available, and store the recognized information.

The satellite may transmit, to the UE and/or the NW, information indicating the point of time and/or the period of time for applying the S&F mode (canceling the application of the normal mode) and/or information indicating the point of time and/or the period of time for canceling the application of the S&F mode (applying the normal mode).

For example, in a case that a satellite operating in the normal mode attempts to operate in the S&F mode, the satellite may transmit information indicating the point of time and/or the period of time for applying the S&F mode (canceling the application of the normal mode). By receiving at least one of these pieces of control information, the UE and/or the NW may recognize that the S&F mode is applied, and/or that the application of the normal mode is canceled, and/or the point of time and/or the period of time for applying the S&F mode, and store the recognized information.

In a case that the satellite operating in the S&F mode attempts to operate in the normal mode, the satellite may transmit information indicating the point of time and/or the period of time for canceling the application of the S&F mode (applying the normal mode). By receiving at least one of these pieces of control information, the UE and/or the NW may recognize that the application of the S&F mode is canceled, and/or that the normal mode is applied, and/or the point of time and/or the period of time for applying the normal mode.

In a case that the UE and/or the NW operating in the normal mode does not receive the information indicating that the UE and/or the NW is operating in the S&F mode and/or the information indicating that the UE and/or the NW is not operating in the normal mode, the UE and/or the NW may recognize that the UE and/or the NW is operating in the normal mode, and store the recognized information.

In a case that the UE and/or the NW operating in the S&F mode does not receive the information indicating that the UE and/or the NW is not operating in the S&F mode and/or the information indicating that the UE and/or the NW is operating in the normal mode, the UE and/or the NW may recognize that the UE and/or the NW is operating in the S&F mode, and store the recognized information.

In a case that the UE and/or the NW operating in the normal mode does not receive the information indicating that the service link is not available or the information indicating that the feeder link is not available, the UE and/or the NW may recognize that the UE and/or the NW is operating in the normal mode, store the recognized information, and perform behavior in the normal mode.

In a case that the UE and/or the NW operating in the S&F mode does not receive the information indicating that the service link is available and the information indicating that the feeder link is available, the UE and/or the NW may recognize that the UE and/or the NW is operating in the S&F mode, store the recognized information, and perform the behavior in the S&F mode.

The UE and/or the satellite and/or the NW may include, in a first control message to an eighth control message described below, the information indicating whether the operation is in the S&F mode, and/or the information indicating whether the service link is available, and/or the information indicating whether the feeder link is available, and/or the information indicating whether the operation is in the normal mode, and/or the information indicating the point of time and/or the period of time for applying the S&F mode, and/or the information indicating the point of time and/or the period of time for canceling the application of the S&F mode, and transmit and/or receive the control messages, or may include the information in a control message different from the first to eighth control messages described below, and transmit and/or receive the different control message. For example, before the first control message is transmitted and/or received, the information may be included in a control message different from the first to eighth control messages described below, and the different control message may be transmitted and/or received. For example, after the first control message is transmitted and/or received and before the eighth control message is transmitted and/or received, the information may be included in a control message different from the first to eighth control messages described below, and the different control message may be transmitted and/or received. For example, after the eighth control message is transmitted and/or received, the information may be included in a control message different from the first to eighth control messages described below, and the different control message may be transmitted and/or received.

In a case that the NW is operating in the S&F mode (in a case that the service link is available but the feeder link is not available), the NW may not transmit, to the UE via the satellite, an MM message or an SM message (also referred to as a first control message) or user data (also referred to as Mobile terminated (MT) data or downlink data) in the MM procedure or the SM procedure initiated by the NW.

In a case that the NW is operating in the S&F mode (in a case that the service link is not available but the feeder link is available), the NW may not transmit the first control message or the user data to the UE via the satellite.

In a case that the NW is operating in the S&F mode (in a case that the service link is not available but the feeder link is available) or in a case that the NW is operating in the normal mode, the NW may transmit the first control message or the user data to the UE via the satellite. Note that the NW may start a timer (also referred to as a first timer) based on the transmission of the first control message or the user data.

In a case that the NW transmits the first control message or the user data to the UE via the satellite while operating in the S&F mode (in a case that the service link is not available but the feeder link is available), the satellite may transmit, to the NW, a control message (also referred to as a second control message) including information indicating that the first control message or the user data has failed to be forwarded, and/or information indicating that the first control message or the user data fails to be forwarded because the feeder link is not available, and the like, as a response to the received first control message or user data. The second control message may be a control message for the NAS layer (NAS message). The NW may recognize that the MM procedure or the SM procedure initiated by the NW has been rejected, based on the reception of the second control message and/or the control information included in the second control message.

In a case that the NW transmits the first control message or the user data to the UE via the satellite while operating in the S&F mode (in a case that the service link is not available but the feeder link is available), the satellite may store the received first control message or user data for a prescribed period of time (also referred to as a first prescribed period of time). In this case, the satellite may transmit, to the NW, a control message (also referred to as a third control message) including information indicating that the service link is not available, and/or information indicating that the first control message or the user data has been stored, and/or information indicating that the first control message or the user data has been stored because the service link is not available, and/or a first prescribed period of time (that is, a period of time for storing), and the like. The third control message may be, for example, a NAS message. Note that the first prescribed period of time may be included in the third control message as a timer value. Based on the reception of the third control message and/or the control information included in the third control message, the NW may recognize information indicating that the service link is not available, and/or information indicating that the first control message or the user data has been stored, and/or information indicating that the first control message or the user data has been stored because the service link is not available, and/or the first prescribed period of time, and the like. The first prescribed period of time may be a period of time determined in advance in accordance with a standard or may be a period of time dependent on implementation of the satellite. Furthermore, the NW may start a timer (also referred to as a second timer) based on the reception of the third control message and/or the control information included in the third control message. At this time, the NW may start the second timer using the first prescribed period of time (or timer value) received from the satellite. The satellite may start a timer (also referred to as a third timer) based on the transmission of the third control message and/or the control information included in the third control message and/or the storage of the first control message or the user data. At this time, the satellite may start the third timer using the first prescribed period of time (or timer value) transmitted to the NW. Note that the third control message and/or at least one piece of control information included in the third control message may be referred to as a store indication or an Access Stratum (AS) indication.

Further, in a case that the service link does not become available within the first prescribed period of time, the satellite may discard or delete the first control message, and/or the control information included in the first control message, or the user data, which has been received from the NW and stored, and transmit the second control message to the NW as a response to the received first control message. Note that the satellite may manage the first prescribed period of time using a timer (third timer). That is, "in a case that the service link does not become available within the first prescribed period of time" may be interchangeably interpreted as "in a case that the service link does not become available after the third timer using the first prescribed period of time is started and before the third timer expires". In a case that the NW receives the second control message and/or the control information included in the second control message before the second timer expires, the NW may recognize that the MM procedure or the SM procedure initiated by the NW has been rejected, may stop the second timer operating in the NW, may recognize that the first control message or the user data has not been forwarded to the UE, may retransmit the first control message or the user data immediately or after waiting for a prescribed period of time (also referred to as a second prescribed period of time), may perform the same procedure or retransmit the user data after waiting for the second prescribed period of time, may perform the same procedure or retransmit the user data in a case that switching to the operation in the normal mode occurs, or may perform, while operating in the S&F mode, the same procedure or retransmit the user data in a case that the service link becomes available.

In a case that the service link becomes available within the first prescribed period of time, the satellite may transmit (that is, forward), to the UE, the first control message, and/or the control information included in the first control message, or the user data, which has been received from the UE and stored. In this case, the satellite may transmit, to the NW, a control message (also referred to as a fourth control message) including information indicating that the first control message or the user data has been forwarded because the service link has become available, information indicating that the stored first control message or user data has been forwarded, or the like. The fourth control message may be, for example, a NAS message. Note that the satellite may manage the first prescribed period of time using a timer (third timer). That is, "in a case that the service link becomes available within the first prescribed period of time" may be interchangeably interpreted as "in a case that the service link becomes available after the third timer using the first prescribed period of time is started and before the third timer expires". Note that the fourth control message or at least one piece of control information included in the fourth control message may be referred to as a forward indication or an Access Stratum (AS) indication. Based on the reception of the fourth control message and/or the control information included in the fourth control message, the NW may stop the second timer operating in the NW, may recognize that the first control message or the user data has been forwarded to the UE, or may recognize that the first control message or the user data need not be retransmitted. The satellite may stop the third timer operating in the satellite, based on the transmission of the fourth control message and/or the control information included in the fourth control message. Note that the case where the service link becomes available may mean the case where switching to the operation in the normal mode occurs, or the case where the service link becomes available while the operation is in the S&F mode.

In a case that the NW does not receive the fourth control message from the satellite until the second timer that is in operation expires, the NW may recognize that the MM procedure or the SM procedure initiated by the NW has been rejected, may stop the second timer that is in operation, may recognize that the first control message or the user data has not been forwarded to the UE, may retransmit the first control message or the user data immediately or after waiting for a second prescribed period of time, may perform the same procedure or retransmit the user data after waiting for the second prescribed period of time, may perform the same procedure or retransmit the user data in a case that switching to the operation in the normal mode occurs, or may perform, while operating in the S&F mode, the same procedure or retransmit the user data in a case that the service link becomes available.

Note that, in a case that the second timer is started, the NW may suspend the first timer that is in operation. In a case that the second timer is stopped or in a case that the second timer expires, the NW may resume the suspended counting of the first timer.

The UE may receive, from the satellite, the first control message or the user data in the MM procedure or the SM procedure initiated by the NW.

In the MM procedure or the SM procedure initiated by the NW, in a case of operating in the S&F mode (in a case that the service link is not available but the feeder link is available) after receiving the first control message from the satellite, the UE may not transmit the MM message or the SM message (also referred to as a fifth control message) to the NW via the satellite as a response to the first control message.

In the MM procedure or the SM procedure initiated by the NW, in a case of operating in the S&F mode (in a case that the service link is available but the feeder link is not available) after receiving the first control message from the satellite, the UE may not transmit the fifth control message to the NW via the satellite as a response to the first control message.

In the MM procedure or the SM procedure initiated by the NW, in a case of operating in the S&F mode (in a case that the service link is available but the feeder link is not available) or in the normal mode after receiving the first control message from the satellite, the UE may transmit the fifth control message to the NW via the satellite as a response to the first control message.

In a case that the UE transmits the fifth control message to the NW via the satellite while operating in the S&F mode (in a case that the service link is available but the feeder link is not available), the satellite may transmit, to the UE, a control message (also referred to as a sixth control message) including information indicating that the fifth control message has failed to be forwarded, information indicating that the fifth control message fails to be forwarded because the feeder link is not available, and/or the like, as a response to the received fifth control message. The sixth control message may be, for example, a control message for any of the layers below the NAS layer (e.g., physical layer, MAC layer, RLC layer, PDCP layer, RRC layer) but may be a control message for the NAS layer (NAS message). Based on the reception of the sixth control message and/or the control information included in the sixth control message, the UE may recognize that the MM procedure or the SM procedure initiated by the NW has been rejected, may stop the fourth timer operating in the UE, may recognize that the fifth control message has not been forwarded to the NW, may retransmit the fifth control message immediately or after waiting for a prescribed period of time (also referred to as a fourth prescribed period of time), may retransmit the fifth control message in a case that switching to the operation in the normal mode occurs, or may retransmit, while operating in the S&F mode, the fifth control message in a case that the feeder link becomes available.

In a case that the UE transmits the fifth control message to the NW via the satellite while operating in the S&F mode (in a case that the service link is available but the feeder link is not available), the satellite may store the received fifth control message for a prescribed period of time (also referred to as a third prescribed period of time). In this case, the satellite may transmit, to the UE, a control message (also referred to as a seventh control message) including information indicating that the service link is not available, and/or information indicating that the fifth control message has been stored, and/or information indicating that the fifth control message has been stored because the service link is not available, and/or the third prescribed period of time (that is, a period of time for storing), and the like. The seventh control message may be, for example, a control message for any of the layers below the NAS layer (e.g., physical layer, MAC layer, RLC layer, PDCP layer, RRC layer) but may be a control message for the NAS layer (NAS message). Note that the third prescribed period of time may be included in the seventh control message as a timer value. Based on the reception of the seventh control message and/or the control information included in the seventh control message, the UE may recognize information indicating that the service link is not available, and/or information indicating that the seventh control message has been stored, and/or information indicating that the seventh control message has been stored because the service link is not available, and/or the third prescribed period of time, and the like. The third prescribed period of time may be a period of time determined in advance in accordance with a standard or may be a period of time dependent on implementation of the satellite. Furthermore, the UE may start a timer (also referred to as a fourth timer) based on the reception of the seventh control message and/or the control information included in the seventh control message. At this time, the UE may start the fourth timer using the third prescribed period of time (or timer value) received from the satellite. The satellite may start a timer (also referred to as a fifth timer) based on the transmission of the seventh control message and/or the control information included in the seventh control message and/or the storage of the fifth control message. At this time, the satellite may start the fifth timer using the third prescribed period of time (or timer value) transmitted to the UE. Note that the seventh control message and/or at least one piece of control information included in the seventh control message may be referred to as a store indication or an Access Stratum (AS) indication.

Further, in a case that the feeder link does not become available within the third prescribed period of time, the satellite may discard or delete the fifth control message and/or the control information included in the fifth control message, which has been received from the NW and stored, and transmit a sixth control message to the UE as a response to the received fifth control message. Note that the satellite may manage the third prescribed period of time using a timer (fifth timer). That is, "in a case that the feeder link does not become available within the third prescribed period" may be interchangeably interpreted as "in a case that the feeder link does not become available after the fifth timer using the third prescribed period is started and before the fifth timer expires". Based on the reception of the sixth control message and/or the control information included in the sixth control message, the UE may recognize that the MM procedure or the SM procedure initiated by the NW has been rejected, may stop the fourth timer operating in the UE, may recognize that the fifth control message has not been forwarded to the NW, may retransmit the fifth control message immediately or after waiting for a prescribed period of time (also referred to as a fourth prescribed period of time), may retransmit the fifth control message in a case that switching to the operation in the normal mode occurs, or may retransmit, while operating in the S&F mode, the fifth control message in a case that the feeder link becomes available.

In a case that the feeder link becomes available within the third prescribed period of time, the satellite may transmit (that is, forward), to the NW, the fifth control message and/or the control information included in the fifth control message, which has been received from the NW and stored. In this case, the satellite may transmit, to the UE, a control message (also referred to as an eighth control message) including information indicating that the fifth control message has been forwarded because the feeder link has become available, information indicating that the stored fifth control message has been forwarded, or the like. The eighth control message may be, for example, a control message for any of the layers below the NAS layer (e.g., physical layer, MAC layer, RLC layer, PDCP layer, RRC layer) but may be a NAS message. Note that the satellite may manage the third prescribed period of time using a timer (fifth timer). That is, "in a case that the feeder link becomes available within the third prescribed period" may be interchangeably interpreted as "in a case that the feeder link becomes available after the fifth timer using the third prescribed period is started and before the fifth timer expires". Note that the eighth control message or at least one piece of control information included in the eighth control message may be referred to as a forward indication or an Access Stratum (AS) indication. Based on the reception of the eighth control message and/or the control information included in the eighth control message, the UE may stop the fourth timer operating in the UE, may recognize that the fifth control message has been forwarded to the NW, or may recognize that the fifth control message need not be retransmitted. The satellite may stop the fifth timer operating in the satellite, based on the transmission of the eighth control message and/or the control information included in the eighth control message. Note that the case where the feeder link becomes available may mean the case where switching to the operation in the normal mode occurs, or the case where the feeder link becomes available while the operation is in the S&F mode.

In a case that the UE does not receive the eighth control message from the satellite before the fourth timer that is in operation expires, the UE may recognize that the MM procedure or the SM procedure initiated by the NW has been rejected, may stop the fourth timer that is in operation in the UE, may recognize that the fifth control message has not been forwarded to the NW, may retransmit the fifth control message immediately or after waiting for a fourth prescribed period of time, may retransmit the fifth control message in a case that switching to the operation in the normal mode occurs, or may retransmit, while operating in the S&F mode, the fifth control message in a case that the service link becomes available.

In a case that the NW receives the fifth control message from the UE via the satellite before the first timer that is in operation expires, the NW may recognize that the MM procedure or the SM procedure initiated by the NW has been normally terminated.

In a case that the NW does not receive the fifth control message from the UE via the satellite until the first timer that is in operation expires, the NW may recognize that the MM procedure or the SM procedure initiated by the NW has not been normally terminated.

In a case that the NW receives the fourth control message from the UE via the satellite before the first timer that is in operation expires, the NW may recognize that the MM procedure or the SM procedure initiated by the NW has been normally terminated.

The first control message may be the de-registration request message, and the fifth control message may be the de-registration accept message. In this case, the first timer may be a T3522 timer.

The first control message may be a configuration update command message, and the fifth control message may not be present. In this case, the first timer may not be present.

The first control message may be the configuration update command message, and the fifth control message may be the configuration update complete message. In this case, the first timer may be a T3555 timer.

The first control message may be a downlink (DL) NAS transport message, and the fifth control message may not be present. In this case, the first timer may not be present.

The first control message may be the paging request message or the paging message, and the fifth control message may be the service request message, or the CP service request message, or the registration request message. In this case, the first timer may be a T3513 timer.

The first control message may be the notification message, and the fifth control message may be the notification response message, or the service request message, or the CP service request message, or the registration request message. In this case, the first timer may be a T3565 timer.

The first control message may be the PDU session modification command message, and the fifth control message may be the PDU session modification complete message or the PDU session modification command reject message. In this case, the first timer may be a T3591 timer.

The first control message may be the PDU session release command message, and the fifth control message may be the PDU session release complete message. In this case, the first timer may be a T3592 timer.

The first control message may be the detach request message, and the fifth control message may be the detach accept message. In this case, the first timer may be a T3422.

The first control message may be the activate default EPS bearer context request message, and the fifth control message may be the activate default EPS bearer context accept message or the activate default EPS bearer context reject message. In this case, the first timer may be a T3485.

The first control message may be the activate dedicated EPS bearer context request message, and the fifth control message may be the activate dedicated EPS bearer context accept message or the activate dedicated EPS bearer context reject message. In this case, the first timer may be a T3485.

The first control message may be the modify EPS bearer context request message, and the fifth control message may be the modify EPS bearer context accept message or the modify EPS bearer context reject message. In this case, the first timer may be a T3486.

The first control message may be the deactivate EPS bearer context request message, and the fifth control message may be the deactivate EPS bearer context accept message. In this case, the first timer may be a T3495.

In a case of receiving the second control message from the satellite, the UE may extend the first timer that is in operation, instead of starting the second timer. For example, the UE may extend the first timer indefinitely or for a period of time until the fifth control message is received.

The first to eighth control messages may include not only control information but also user data.

The behaviors of the UE, the satellite, and the NW operating in the S&F mode can also be applied in a case that an attempt is being made to operate in the normal mode or switching to the operation in the normal mode occurs before or during the performance of the procedure or the transmission of the user data.

The behaviors of the UE, the satellite, and the NW operating in the normal mode can also be applied in a case that an attempt is being made to operate in the S&F mode or switching to the operation in the S&F mode occurs before or during the performance of the procedure or the transmission of the user data.

Note that the above may be applied not only to the PLMN but also to the NPN (SNPN and/or PNI-NPN).

The above may be applied only to the 3GPP access, may be applied only to the non-3GPP access, or may be applied to both the 3GPP access and the non-3GPP access.

Note that the present embodiment may be performed multiple times, the first embodiment may be performed one or more times after the present embodiment is performed one or more times, or the present embodiment may be performed one or more times after the first embodiment is performed one or more times.

### 4. Modifications

A program running on an apparatus according to an aspect of the present invention may serve as a program that controls a Central Processing Unit (CPU) and the like to cause a computer to function in such a manner as to realize the functions of the embodiment according to the aspect of the present invention. Programs or information handled by the programs are temporarily stored in a volatile memory such as a Random Access Memory (RAM), a nonvolatile memory such as a flash memory, a Hard Disk Drive (HDD), or another storage apparatus system.

Note that a program for realizing such functions of the embodiment according to an aspect of the present invention may be recorded on a computer-readable recording medium. This configuration may be realized by causing a computer system to read the program recorded on the recording medium and to perform the program. It is assumed that the "computer system" refers to a computer system built into the apparatuses, and the computer system includes an operating system and hardware components such as a peripheral device. Furthermore, the "computer-readable recording medium" may be a semiconductor recording medium, an optical recording medium, a magnetic recording medium, a medium dynamically holding the program for a short time, or any other computer readable recording medium.

Each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a known processor, a controller, a micro-controller, or a state machine. The aforementioned electric circuit may include a digital circuit or may include an analog circuit. Furthermore, in a case that with advances in semiconductor technology, a circuit integration technology appears that replaces the present integrated circuits, it is also possible to use a new integrated circuit based on the technology according to one or more aspects of the present invention.

Note that the invention of the present application is not limited to the above-described embodiment. In the embodiment, apparatuses have been described as an example, but an aspect of the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

Although the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. A configuration in which elements described in the respective embodiments and having mutually similar effects are substituted for one another is also included.

### Industrial Applicability

An aspect of the present invention can be used, for example, in communication systems, communication equipment (for example, mobile phone devices, base station apparatus, wireless LAN devices, or sensor devices), integrated circuits (for example, communication chips), programs, and the like.

### Reference Signs List

1 Mobile communication system
10 UE_A
30 PGW-U
32 PGW-C
35 SGW
40 MME
45 eNB
50 HSS
60 PCRF
80 Access network_A
90 Core network_A
120 Access network_B
122 gNB
130 UPF
132 SMF
140 AMF
150 UDM
160 PCF
170 N3IWF
190 Core network_B

## Claims

1. A UE comprising:
a transmission and/or reception unit; and
a controller, wherein
the UE is capable of communicating with a satellite equipped with a base station function,
the transmission and/or reception unit
transmits, to the satellite, information indicating that an S&F mode is supported, and
receives, from the satellite, information indicating that a registration request message has been stored, and information indicating that a feeder link is not available, and a timer value,
the controller sets the timer value in a timer and starts the timer, and
in a case that the transmission and/or reception unit receives information indicating that the registration request message has been forwarded, the controller stops the timer that is in operation.
